# EUROPEAN PATENT APPLICATION

(11) **EP 4 507 380 A1**
(43) Date of publication of application: **12.02.2025**
(21) Application number: 23795165.2
(22) Date of filing: 19.04.2023
(51) Int. Cl.: H04W 36/00, H04W 36/08

(54) **ROAMING METHOD AND DEVICE AND COMMUNICATION SYSTEM**

(30) Priority: 30.04.2022 CN 202210476673
(71) Applicant: Huawei Technologies Co., Ltd., Shenzhen, Guangdong 518129 (CN)
(72) Inventor: ZHANG, Yinxi, Shenzhen, Guangdong 518129 (CN)
(74) Representative: Goddar, Heinz J.
(86) International application number: PCT/CN2023/089337
(87) International publication number: WO 2023/207732

(57) **Abstract**

Embodiments of this disclosure provide a roaming method, to resolve a problem of a packet loss during data transmission in a roaming scenario. The method includes: A device includes a first radio frequency module and a second radio frequency module. The device enables the first radio frequency module to start first roaming. If it is detected that the first radio frequency module is in a process of the first roaming, the device suppresses the second radio frequency module to start second roaming. If it is detected that the first roaming of the first radio frequency module is ended, the device enables the second radio frequency module to start the second roaming. According to the method, based on a wireless local area network dual fed and selective receiving mode, roaming processes of two radio frequency modules are uniformly and cooperatively controlled, to ensure that there is always a reliable wireless connection available for service packet processing in the roaming processes, thereby helping improve packet transmission reliability, and further avoiding a loss that may be caused by a lost transmitted packet.

## Description

### CROSS-REFERENCE TO RELATED APPLICATIONS

This application claims priority to Patent Application No. 202210476673.9, filed with the China National Intellectual Property Administration on April 30, 2022 and entitled "ROAMING METHOD, DEVICE, AND COMMUNICATION SYSTEM", which is incorporated herein by reference in its entirety.

### TECHNICAL FIELD

This disclosure relates to the communication field, and more specifically, to a roaming method, a device, and a communication system.

### BACKGROUND

In digital and intelligent transformation of the manufacturing industry, reconstruction of intelligent production lines is an important part. Various production devices, such as an SMT machine, an automatic boarding machine, a solder paste printer, a reflow soldering device, and an automated optical inspection (automated optical inspection, AOI) device, are arranged in a production line. These devices need to be connected to a network during running to ensure remote control and data collection of the production line devices. Flexible manufacturing in production and manufacturing requires that production lines be reconstructed in a timely and lightweight manner based on different product production plans.

Devices in a production line are usually connected to fixed network cables. In addition, wired network planning above the production line is fixed, which cannot meet a network access requirement of a newly constructed production line. Therefore, a wireless network can be used to replace a wired network. This network change is referred to as "pigtailing". For example, a wired network can be converted into a wireless network by installing customer premises equipment (customer premises equipment, CPE) on a production line device, and then a network access connection is completed through the wireless network. In this way, an uplink of the production line is not connected using a fixed network cable, and is not restricted to an insufficient quantity of reserved network interfaces. Therefore, production line rearrangement becomes easy, which well supports flexible manufacturing.

However, reliability of the wireless network is low, and a data packet loss may occur. Because data of a production line device is for timely control and monitoring of a production line, high data reliability is required. If a data packet is lost, production may be greatly affected, resulting in an irreparable loss.

### SUMMARY

Embodiments of this application provide a roaming solution, to resolve a problem of a packet loss during data transmission in a roaming scenario. In this solution, based on a dual fed and selective receiving mode, roaming processes of two radio frequency modules are uniformly and cooperatively controlled, to ensure that there is always a reliable wireless connection available for service packet processing in the roaming processes.

According to a first aspect of this application, a roaming method is provided, and is applied to a device. The method includes: The device enables a first radio frequency module to start first roaming, where the device includes the first radio frequency module and a second radio frequency module; if it is detected that the first radio frequency module is in a process of the first roaming, the device suppresses the second radio frequency module to start second roaming; and if it is detected that the first roaming of the first radio frequency module is ended, the device enables the second radio frequency module to start the second roaming.

According to the technical solution of this application, in a wireless local area network dual fed and selective receiving roaming scenario, packet transmission reliability can be improved, and a loss that may be caused by a lost transmitted packet can be avoided.

With reference to the first aspect, in some embodiments, in response to the first radio frequency module initiating a first roaming request, the device enables the first radio frequency module to start the first roaming.

With reference to the first aspect, in some embodiments, the device detects that the first radio frequency module initiates a first roaming request; and in response to detecting that signal quality represented by a signal indicator of the first radio frequency module is poorer than signal quality represented by a signal indicator of the second radio frequency module, the device enables the first radio frequency module to start the first roaming.

With reference to the first aspect, in some embodiments, the method further includes: The first radio frequency module initiates the first roaming request in response to detecting that the signal quality represented by the signal indicator of the first radio frequency module is poorer than or equal to signal quality represented by a first threshold.

With reference to the first aspect, in some embodiments, the method further includes: When the first radio frequency module is in the process of the first roaming, the device detects that the second radio frequency module initiates a second roaming request.

With reference to the first aspect, in some embodiments, the device detects that the second radio frequency module initiates a second roaming request; and in response to detecting that signal quality represented by a signal indicator of the first radio frequency module is poorer than signal quality represented by a signal indicator of the second radio frequency module, the device enables the first radio frequency module to start the first roaming.

With reference to the first aspect, in some embodiments, the method further includes: The second radio frequency module initiates the second roaming request in response to detecting that the signal quality represented by the signal indicator of the second radio frequency module is poorer than or equal to signal quality represented by a second threshold.

With reference to the first aspect, in some embodiments, in response to detecting that signal quality represented by a signal indicator of the first radio frequency module is poorer than signal quality represented by a signal indicator of the second radio frequency module and that the signal quality represented by the signal indicator of the first radio frequency module is poorer than or equal to signal quality represented by a third threshold, the device enables the first radio frequency module to start the first roaming.

With reference to the first aspect, in some embodiments, either of the signal indicator of the first radio frequency module and the signal indicator of the second radio frequency module includes a signal optimization degree indicator or a signal degradation degree indicator. The signal optimization degree indicator includes one or more of the following: signal strength, a channel quality indicator CQI, a signal to interference plus noise ratio SINR, or a transmit opportunity TXOP, and the signal degradation degree indicator includes one or more of the following: channel busyness, channel load, a packet retransmission rate, a bit error rate, a packet loss rate, a channel delay, or a quantity of missed beacon frames. A larger value of the signal optimization degree indicator indicates better signal quality, and a smaller value of the signal degradation degree indicator indicates better signal quality.

If the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold. If the signal indicator of the second radio frequency module is the signal optimization degree indicator, a value of the signal indicator of the second radio frequency module is less than or equal to the second threshold; or if the signal indicator of the second radio frequency module is the signal degradation degree indicator, a value of the signal indicator of the second radio frequency module is greater than or equal to the second threshold. If the signal indicator of the first radio frequency module is the signal optimization degree indicator, a value of the signal indicator of the first radio frequency module is less than or equal to the third threshold; or if the signal indicator of the first radio frequency module is the signal degradation degree indicator, a value of the signal indicator of the first radio frequency module is greater than or equal to the third threshold.

With reference to the first aspect, in some embodiments, the method further includes: Before the first roaming is started, the device accesses a first wireless access point (AP) through the first radio frequency module. After the first roaming is ended, the device accesses a third AP through the first radio frequency module. The first roaming is that the device roams from the first AP to the third AP through the first radio frequency module, and the first AP and the third AP have same settings that include one or more of the following: a service set identifier SSID, an authentication password, an operating frequency band, an encryption manner, or the like.

With reference to the first aspect, in some embodiments, the method further includes: Before the second roaming is started, the device accesses a second AP through the second radio frequency module. After the second roaming is ended, the device accesses a fourth AP through the second radio frequency module. The second roaming is that the device roams from the second AP to the fourth AP through the second radio frequency module, and the second AP and the fourth AP have same settings that include one or more of the following: a service set identifier SSID, an authentication password, an operating frequency band, an encryption manner, or the like.

With reference to the first aspect, in some embodiments, the device is a first device, and the method further includes: The first device sends a packet through the first radio frequency module; and the first device sends the packet through the second radio frequency module. The packet sent through the first radio frequency module and the packet sent through the second radio frequency module are successively received by a second device, so that the packet that is first received by the second device is reserved or forwarded by the second device, and the packet that is later received by the second device is deleted by the second device. In such a dual fed and selective receiving mode, packet transmission reliability can be improved, and a packet loss rate can be reduced.

With reference to the first aspect, in some embodiments, the second device includes a wireless local area network access controller, and the second device is configured to manage the first AP, the second AP, the third AP, and/or the fourth AP. The second device is configured to receive the packet that is sent through the first radio frequency module and that is received by the first AP; the second device is configured to receive the packet that is sent through the second radio frequency module and that is received by the second AP; the second device is configured to receive the packet that is sent through the first radio frequency module and that is received by the third AP; and/or the second device is configured to receive the packet that is sent through the second radio frequency module and that is received by the fourth AP.

With reference to the first aspect, in some embodiments, the first radio frequency module operates on a 2.4 GHz frequency band, and the second radio frequency module operates on a 5 GHz frequency band. Alternatively, the first radio frequency module operates on a 5 GHz frequency band, and the second radio frequency module operates on a 2.4 GHz frequency band.

With reference to the first aspect, in some embodiments, the device includes any one of the following: customer premises equipment (CPE), a router, a mobile phone, a tablet computer, a portable computer, a mobile smart home device, a vehicle-mounted device, a wearable device, a virtual reality terminal device, an augmented reality terminal device, a terminal in industrial control, a terminal in unmanned driving, a terminal in telemedicine, a terminal in a smart grid, a terminal in transportation safety, a terminal in a smart city, and a terminal in a smart home.

According to a second aspect of this application, a roaming apparatus is provided. The apparatus includes a first radio frequency module and a second radio frequency module, and further includes: a control unit, configured to enable the first radio frequency module to start first roaming; and an obtaining unit, configured to obtain a status of the first radio frequency module or the second radio frequency module. The control unit is further configured to: if the obtaining unit detects that the first radio frequency module is in a process of the first roaming, suppress the second radio frequency module to start second roaming. The control unit is further configured to: if the obtaining unit detects that the first roaming of the first radio frequency module is ended, enable the second radio frequency module to start the second roaming.

According to the apparatus provided in this embodiment of this application, in a wireless local area network dual fed and selective receiving roaming scenario, packet transmission reliability can be improved, and a loss that may be caused by a lost transmitted packet can be avoided.

With reference to the second aspect, in some embodiments, the obtaining unit is further configured to obtain that the first radio frequency module initiates a first roaming request. The control unit is further configured to: in response to obtaining, by the obtaining unit, that the first radio frequency module initiates the first roaming request, enable the first radio frequency module to start the first roaming.

With reference to the second aspect, in some embodiments, the apparatus further includes a detection unit, configured to detect a signal indicator of the first radio frequency module or a signal indicator of the second radio frequency module. The obtaining unit is further configured to obtain that the first radio frequency module initiates a first roaming request. The control unit is further configured to: in response to detecting that signal quality represented by a signal indicator of the first radio frequency module is poorer than signal quality represented by a signal indicator of the second radio frequency module, enable the first radio frequency module to start the first roaming.

With reference to the second aspect, in some embodiments, the obtaining unit is further configured to: in response to detecting that the signal quality represented by the signal indicator of the first radio frequency module is poorer than or equal to signal quality represented by a first threshold, obtain that the first radio frequency module initiates the first roaming request.

With reference to the second aspect, in some embodiments, the obtaining unit is further configured to: when the first radio frequency module is in the process of the first roaming, obtain that the second radio frequency module initiates a second roaming request.

With reference to the second aspect, in some embodiments, the obtaining unit is further configured to obtain that the second radio frequency module initiates a second roaming request. The control unit is further configured to: in response to detecting that signal quality represented by a signal indicator of the first radio frequency module is poorer than signal quality represented by a signal indicator of the second radio frequency module, enable the first radio frequency module to start the first roaming.

With reference to the second aspect, in some embodiments, the obtaining unit is further configured to: in response to detecting that the signal quality represented by the signal indicator of the second radio frequency module is poorer than or equal to signal quality represented by a second threshold, obtain that the second radio frequency module initiates the second roaming request.

With reference to the second aspect, in some embodiments, the control unit is configured to: in response to detecting that signal quality represented by a signal indicator of the first radio frequency module is poorer than signal quality represented by a signal indicator of the second radio frequency module and that the signal quality represented by the signal indicator of the first radio frequency module is poorer than or equal to signal quality represented by a third threshold, enable the first radio frequency module to start the first roaming.

With reference to the second aspect, in some embodiments, either of the signal indicator of the first radio frequency module and the signal indicator of the second radio frequency module includes a signal optimization degree indicator or a signal degradation degree indicator, the signal optimization degree indicator includes one or more of the following: signal strength, a channel quality indicator CQI, a signal to interference plus noise ratio SINR, or a transmit opportunity TXOP, and the signal degradation degree indicator includes one or more of the following: channel busyness, channel load, a packet retransmission rate, a bit error rate, a packet loss rate, a channel delay, or a quantity of missed beacon frames. A larger value of the signal optimization degree indicator indicates better signal quality, and a smaller value of the signal degradation degree indicator indicates better signal quality.

With reference to the second aspect, in some embodiments, that the signal quality represented by the signal indicator of the first radio frequency module is poorer than or equal to signal quality represented by a first threshold includes: If the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold.

With reference to the second aspect, in some embodiments, that the signal quality represented by the signal indicator of the second radio frequency module is poorer than or equal to signal quality represented by a second threshold includes: If the signal indicator of the second radio frequency module is the signal optimization degree indicator, a value of the signal indicator of the second radio frequency module is less than or equal to the second threshold; or if the signal indicator of the second radio frequency module is the signal degradation degree indicator, a value of the signal indicator of the second radio frequency module is greater than or equal to the second threshold.

With reference to the second aspect, in some embodiments, that the signal quality represented by the signal indicator of the first radio frequency module is poorer than or equal to signal quality represented by a third threshold includes: if the signal indicator of the first radio frequency module is the signal optimization degree indicator, a value of the signal indicator of the first radio frequency module is less than or equal to the third threshold; or if the signal indicator of the first radio frequency module is the signal degradation degree indicator, a value of the signal indicator of the first radio frequency module is greater than or equal to the third threshold.

With reference to the second aspect, in some embodiments, the apparatus further includes a communication unit, where the communication unit is configured to: before the first roaming is started, access a first wireless access point (AP) through the first radio frequency module. The communication unit is further configured to: after the first roaming is ended, access a third AP through the first radio frequency module. The first roaming is that the communication unit roams from the first AP to the third AP through the first radio frequency module, and the first AP and the third AP have same settings that include one or more of the following: a service set identifier SSID, an authentication password, an operating frequency band, or an encryption manner. The communication unit is further configured to: before the second roaming is started, access a second AP through the second radio frequency module. The communication unit is further configured to: after the second roaming is ended, access a fourth AP through the second radio frequency module. The second roaming is that the communication unit roams from the second AP to the fourth AP through the second radio frequency module, and the second AP and the fourth AP have same settings that include one or more of the following: a service set identifier SSID, an authentication password, an operating frequency band, or an encryption manner.

With reference to the second aspect, in some embodiments, the apparatus is a first apparatus, and the communication unit is further configured to send a packet through the first radio frequency module. The communication unit is further configured to send the packet through the second radio frequency module. The packet sent through the first radio frequency module and the packet sent through the second radio frequency module are successively received by a second apparatus, so that the packet that is first received by the second apparatus is reserved or forwarded by the second apparatus, and the packet that is later received by the second apparatus is deleted by the second apparatus.

With reference to the second aspect, in some embodiments, the second apparatus includes a wireless local area network access controller, and the second apparatus is configured to manage the first AP, the second AP, the third AP, and/or the fourth AP. The second apparatus is configured to receive the packet that is sent through the first radio frequency module and that is received by the first AP; the second apparatus is configured to receive the packet that is sent through the second radio frequency module and that is received by the second AP; the second apparatus is configured to receive the packet that is sent through the first radio frequency module and that is received by the third AP; and/or the second apparatus is configured to receive the packet that is sent through the second radio frequency module and that is received by the fourth AP.

With reference to the second aspect, in some embodiments, the first radio frequency module operates on a 2.4 GHz frequency band, and the second radio frequency module operates on a 5 GHz frequency band. Alternatively, the first radio frequency module operates on a 5 GHz frequency band, and the second radio frequency module operates on a 2.4 GHz frequency band.

With reference to the second aspect, in some embodiments, the apparatus includes any one of the following: customer premises equipment (CPE), a router, a mobile phone, a tablet computer, a portable computer, a mobile smart home device, a vehicle-mounted device, a wearable device, a virtual reality terminal device, an augmented reality terminal device, a terminal in industrial control, a terminal in unmanned driving, a terminal in telemedicine, a terminal in a smart grid, a terminal in transportation safety, a terminal in a smart city, and a terminal in a smart home.

According to a third aspect of this application, an electronic device is provided. The electronic device includes a transceiver, a memory, and a processor coupled to the memory. The transceiver is configured to receive and send a packet, the memory stores executable instructions, and the processor is configured to invoke the executable instructions, so that the electronic device implements an operation of the method according to any one of the first aspect or the embodiments of the first aspect.

According to a fourth aspect of this application, a computer-readable storage medium is provided. The computer-readable storage medium stores computer-executable instructions. When the computer-executable instructions are executed by a processor, an operation of the method according to any one of the first aspect or the embodiments of the first aspect is implemented.

According to a fifth aspect of this application, a computer program product is provided, where the computer program product includes computer-executable instructions. When the computer-executable instructions are executed, an operation of the method according to any one of the first aspect or the embodiments of the first aspect is implemented.

According to a sixth aspect of this application, a chip or a chip system is provided. The chip or the chip system includes a processing circuit, used in a device, and configured to implement an operation of the method according to any one of the first aspect or the embodiments of the first aspect.

According to a seventh aspect of this application, a communication system is provided, and includes a first device, a second device, a first AP, a second AP, a third AP, and a fourth AP. The first device is configured to implement an operation of the method according to any one of the first aspect or the embodiments of the first aspect.

According to the foregoing aspects, based on a wireless local area network dual fed and selective receiving mode, the device can uniformly and cooperatively control roaming processes of two radio frequency modules, to ensure that there is always a reliable wireless connection available for service packet processing in the roaming processes, thereby helping improve packet transmission reliability, and further avoiding a loss that may be caused by a lost transmitted packet.

### BRIEF DESCRIPTION OF DRAWINGS

With reference to the accompanying drawings and the following detailed descriptions, the foregoing and other features, advantages, and aspects of embodiments of this disclosure become more apparent. In the accompanying drawings, the same or similar reference signs of the accompanying drawings represent same or similar elements.
FIG. 1 is a schematic diagram of a process in which a device accesses an AP;
FIG. 2 is a schematic diagram of a device roaming process;
FIG. 3 is a schematic diagram of a structure of a terminal device according to an embodiment of this application;
FIG. 4 is a schematic diagram of a structure of a network device according to an embodiment of this application;
FIG. 5 is a schematic diagram of an application scenario according to an embodiment of this application;
FIG. 6A to FIG. 6D are schematic diagrams of a roaming solution according to an embodiment of this application;
FIG. 7 is a schematic diagram of a service processing procedure according to an embodiment of this application;
FIG. 8 is a schematic diagram of a service processing procedure according to an embodiment of this application;
FIG. 9 is a schematic block diagram of a roaming method procedure according to an embodiment of this application;
FIG. 10 is a schematic diagram of function modules of a communication system according to an embodiment of this application; and
FIG. 11 is a schematic diagram of logical units of an apparatus according to an embodiment of this application.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

Terms used in the following embodiments of this application are merely intended to describe specific embodiments, but are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that the term "and/or" as used in this application refers to and includes any or all possible combinations of one or more of the listed items.

In descriptions of embodiments of this application, the term "including" and similar terms should be understood as non-exclusive inclusion, namely, "including but not limited to". The term "based on" should be understood as "at least partially based on". The term "one embodiment" or "this embodiment" should be understood as "at least one embodiment". It should be understood that expressions such as "first", "second", and "third" are merely intended to indicate that a plurality of objects may be different, but it is not excluded that two objects are the same. The expressions such as "first", "second", and "third" should not be construed as any limitation on the embodiments. The terms "first" and "second" are merely intended for a purpose of description, and shall not be understood as an indication or implication of relative importance or an implicit indication of a quantity of indicated technical features. Therefore, features defined by "first" and "second" may explicitly or implicitly include one or more of the features. In the descriptions of the embodiments of this application, "a plurality of" means two or more unless otherwise specified. Other explicit and implied definitions may be included below.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

Because reliability of a conventional wireless network is low, a data packet loss may occur. Especially, when a mobile device is roaming, a data packet loss is more likely to occur. Therefore, in a similar scenario in which high data transmission reliability is required, for example, in a production line, an effective solution is required to resolve a problem of a data transmission loss in a roaming scenario, thereby avoiding a data packet loss, and improving data transmission reliability.

In some implementations, reliability of data transmission on a wireless network may be improved by using a dual fed and selective receiving mode. The dual fed and selective receiving mode means that two same packets are sent, and then one of the packets is selected for subsequent transmission. In an example, a CPE may be mounted on a terminal. The CPE may convert a wired network into a wireless network. After receiving a packet sent by the terminal, the CPE may obtain a same packet through replication, and then send the packets through two different channels respectively. The two packets arrive at a wireless local area network (wireless local area network, WLAN) wireless access controller (access point controller, AC) successively or simultaneously, and one of the packets is selected on the WLAN AC for subsequent transmission. This dual fed and selective receiving mode can further ensure reliability of air interface (air interface) transmission. However, for a terminal device such as an automated guided vehicle (automated guided vehicle, AGV) in a moving process, that is, when a wireless network is in a roaming scenario, a packet loss may occur.

To resolve the foregoing problem and other potential problems, this application provides a roaming solution, to resolve a problem of a packet loss during data transmission in a roaming scenario. In this solution, based on a WLAN dual fed and selective receiving mode, roaming processes of two radio frequency (radio frequency, RF) modules are uniformly and cooperatively controlled, to ensure that there is always a reliable wireless connection available for service packet processing in the roaming processes.

According to the technical solution of this application, in a WLAN dual fed and selective receiving roaming scenario, packet transmission reliability can be improved, and a loss that may be caused by a lost transmitted packet can be avoided.

For ease of understanding, the following describes some related terms and related concepts in embodiments of this application. Terms used in the description of embodiments of the present invention are merely used to explain specific embodiments of the present invention, but are not intended to limit the present invention.

### (1) Terminal device (user equipment, UE)

The terminal device is referred to as a terminal. The terminal may be fixed or mobile. A terminal device is usually an intelligent electronic device that can interact with a user and provide a service function for the user. Some terminals may provide user interfaces. In some cases, the terminal device may also be referred to as user equipment, a terminal (terminal), an access terminal, a user terminal, a subscriber unit, a subscriber station, a station (station, STA), a mobile device, a mobile terminal, a mobile console, a mobile station (mobile station), a mobile client, a mobile unit (mobile unit), a remote station, a remote terminal, a remote unit, a wireless unit, a communication device, a user agent, a user apparatus, or the like.

An application scenario of the terminal is not limited in embodiments of this application. For example, the terminal may be a mobile phone (mobile phone), a tablet computer (Pad), a portable computer, a desktop computer, a laptop computer, a handheld computer, a notebook computer, a netbook, an unmanned aerial vehicle, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a terminal in industrial control (industrial control), a terminal in a smart grid (smart grid), a terminal in transportation safety (transportation safety), a terminal in a smart city (smart city), a terminal in a smart home (smart home), or the like. A specific type of the terminal is not specially limited in embodiments of this application. The terminal in embodiments of this application may be equipped with an Android^{®} system, a Windows^{®} system, an iOS^{®} system, a macOS^{®} system, a Linux^{®} system, a Microsoft^{®} system, a HarmonyOS, or another type of operating system. This is not limited in this application.

### (2) Customer premises equipment (customer premises equipment, CPE)

The CPE is a network terminal device for network conversion. The CPE may convert a mobile network signal, a wired network signal (for example, a broadband signal), a wireless network signal (for example, a Wi-Fi signal), or the like that is received into a wireless network signal (for example, a Wi-Fi signal), a wired network signal (for example, a broadband signal), or the like for sending, so that another terminal device can access a network.

Specifically, in some implementations, the CPE may be configured with at least one of a subscriber identification module (subscriber identification module, SIM) card interface, a wireless network interface, a wired network interface, and the like. The CPE may receive a cellular network (cellular network) signal such as a 2G/3G/4G/5G signal by inserting a SIM card, and then convert the signal into a wireless network signal such as a Wi-Fi signal, so that another STA can access a wireless network conveniently. The CPE may also be connected to a wired network interface via a network cable to convert a broadband network signal into a wireless network signal such as Wi-Fi, so that another STA can access the wireless network conveniently. The CPE may further receive a wireless network signal from a wireless network device or a wireless access point (access point, AP), convert the wireless network signal into a radio signal, and transmit the radio signal, so that another STA can access the wireless network. The CPE may establish one or more wireless APs to transmit wireless network signals.

Some CPEs may further convert a received signal into a wired network signal. A manner in which a CPE obtains a network signal and converts the network signal is not limited in this application. Therefore, the CPE can be for extending coverage of a wired or wireless network signal. In some embodiments, the CPE may have an indicator, and the indicator indicates that a currently accessed network is a mobile network (for example, 4G or 5G), a wireless network, or the like.

### (3) Radio frequency module

In the following embodiments of this application, the radio frequency module may also be referred to as a radio frequency system or radio frequency, is a communication integrated circuit that may be configured to receive and/or send a radio signal, and may include a transmitter and/or a receiver. The radio frequency module may include components such as a radio frequency front end, a baseband processor, and an upper-layer interface.

### (4) Channel

The channel may also be referred to as a path or a frequency band, and is a path that uses a radio signal as a transmission carrier and is for transmitting data. A frequency and a bandwidth may be for describing the wireless channel, and the frequency and the bandwidth jointly determine a frequency range of the signal transmitted on the channel.

A parameter for measuring communication performance of a wireless channel may include one or more of the following: a channel quality indicator (channel quality indicator, CQI), a signal to interference plus noise ratio (signal to interference plus noise ratio, SINR), channel utilization (channel utilization) or channel busyness, channel load, a transmit opportunity (transmit opportunity, TXOP), a packet retransmission rate, a channel delay, a communication rate, or the like. It may be understood that the foregoing parameters are merely examples, and in actual application, the parameter for measuring the channel quality may be another parameter. This is not limited in embodiments.

The CQI may indicate channel quality. A higher CQI value indicates that a channel transmission condition is better, and that data with a higher modulation and coding rate can be transmitted, that is, channel quality is better.

The SINR is a ratio of strength of a received expected signal to strength of a received interference signal (noise and interference). Usually, a higher SINR value indicates a smaller noise in a signal, that is, better channel quality.

The channel utilization or the channel busyness reflects a busy degree of a radio frequency spectrum and overall channel availability of a wireless access point. Usually, a value is expressed in percentage. A larger percentage indicates a busier channel, that is, poorer channel quality. The channel utilization reflects impact of co-channel interference, adjacent-channel interference, and non-Wi-Fi interference on an operating channel of the wireless access point, and reflects intensity of air medium competition (impact of client competition on the channel utilization) and a data transmission status.

The channel load refers to a quantity of wireless access points operating on a current channel. A larger quantity of wireless access points operating on one channel usually indicates poorer channel quality.

The TXOP indicates maximum duration for which an AP occupies a channel (without contention). Longer TXOP duration obtained by a channel usually indicates better channel quality.

The packet retransmission rate is a ratio of a quantity of retransmitted packets to a quantity of valid packets. A higher packet retransmission rate indicates poorer channel quality.

The channel delay is time consumed by the wireless channel to transmit data from one end to another end. A user can directly perceive an interaction delay, where the interaction delay includes the channel delay. There are many factors that affect a channel delay, for example, an air interface busy degree of an access device and a signal-to-noise ratio of a wireless channel. For a wireless channel, when there are a plurality of high-throughput services on the channel for data exchange, it may be considered that an air interface corresponding to the wireless channel is busy. In addition, for a low-delay service, a larger quantity of other services for transmitting data on a same channel indicates a lower signal-to-noise ratio of the channel.

The communication rate is a quantity of information bits that are correctly transmitted on the wireless channel in a unit time.

A STA may obtain one or more of the foregoing parameters for measuring channel communication performance. The channel communication performance may be represented by one of the foregoing parameters, or may be comprehensively measured by a plurality of parameters. For example, different weights are configured for different parameters, and a parameter for comprehensively measuring channel quality is obtained through calculation. In some embodiments, a time period for obtaining the parameter may be further customized. For example, obtaining an average channel quality parameter within six hours may be set. A specific parameter may be set by a developer according to an actual situation, and this is not limited in embodiments.

In an open system interconnection (open system interconnection, OSI) model, a wireless channel is located at a physical layer. It should be noted that the communication performance of the wireless channel is time-varying, to be specific, the communication performance of the wireless channel in a future period of time may not be accurately determined.

A Wi-Fi channel has a specific bandwidth, and is for carrying information to be transmitted. Wi-Fi frequency bands include a 5 GHz frequency band and a 2.4 GHz frequency band. A channel of the 5 GHz frequency band may provide a wireless transmission rate higher than a channel of the 2.4 GHz frequency band. For example, a minimum wireless transmission rate of the channel may reach 433 Mbps, and a wireless transmission rate of some high-performance devices connected to the 5 GHz frequency band may even reach 1 Gbps or higher. Specifically, a frequency bandwidth of the 2.4 GHz frequency band is 83.5 MHz, and a frequency bandwidth of the 5 GHz frequency band reaches 555 MHz. In the IEEE 802.11 series standards, a 2.4 GHz/5 GHz frequency band is divided into a plurality of channels. Frequency overlapping exists between a plurality of adjacent channels. If a same channel or an overlapping channel is used for wireless connection, a channel contention relationship is formed, and radio link quality is affected. This is because interference is generated when an electromagnetic wave encounters a wave with a same frequency. The interference is superimposed or attenuated based on a phase difference. If there are different Wi-Fi access points in a coverage area and a plurality of APs use a same channel to access the Internet at the same time, severe signal interference may be generated, resulting in slow Internet access. To effectively avoid mutual interference caused by channel overlapping, a wireless connection should be selected for operating on channels that do not overlap each other, that is, on independent channels.

For example, a CPE supports dual-band Wi-Fi, to be specific, Wi-Fi is supported to operate on a 2.4 GHz frequency band and a 5 GHz frequency band. A Wi-Fi module of the CPE may access an AP on the 2.4 GHz frequency band and an AP on the 5 GHz frequency band. For example, the CPE may access a first AP and a second AP, an operating frequency band of the first AP accessed by the CPE is a first frequency band (for example, the 2.4 GHz frequency band), and an operating frequency band of the second AP accessed by the CPE is a second frequency band (for example, the 5 GHz frequency band). The AP and the CPE may negotiate a channel frequency band when establishing a Wi-Fi connection, to determine a channel frequency band to be used. In some embodiments, the Wi-Fi module of the CPE may further provide a plurality of APs. Some or all of the plurality of APs may operate on the first frequency band (for example, the 2.4 GHz frequency band), or may operate on the second frequency band (for example, the 5 GHz frequency band). The first frequency band and the second frequency band are different. One wireless connection cannot operate on both the first frequency band and the second frequency band. Other STAs can be connected to different APs on the CPE through wireless connections.

Usually, a radio frequency range of the 2.4 GHz frequency band is 2.4 GHz to 2.4835 GHz. A radio frequency range of the 5 GHz frequency band may be 5.150 GHz to 5.350 GHz, 5.725 GHz to 5.825 GHz, or 5.470 GHz to 5.725 GHz. The radio frequency range of the 5 GHz frequency band differs in different areas. It should be noted that in embodiments of this application, the first frequency band is not limited to the 2.4 GHz frequency band, and the second frequency band is not limited to the 5 GHz frequency band. The method provided in embodiments of this application may be used provided that both devices connected through Wi-Fi support two frequency bands.

### (5) Wireless access point (access point, AP)

The AP is known as a "hotspot", and is for providing a wireless network. As an access point for some terminals to access a network, the hotspot provides relay and bridging functions, and may expand coverage of the wireless network. A wireless network adapter may be configured on a terminal to receive a wireless network signal.

The AP may include a fit AP (FIT AP) and a fat AP (FAT AP). Fit APs cannot be configured by themselves. Instead, they need to be uniformly controlled, managed, and configured by a wireless access controller (access point controller, AC). Some fat APs can be managed by themselves without requiring an additional AC. In addition to a wireless access function, they have two interfaces, a wide area network (wide area network, WAN) interface and a local area network (local area network, LAN) interface, and support a network address translation (network address translation, NAT) function. Most fat APs support security functions such as dynamic host configuration protocol (dynamic host configuration protocol, DHCP) servers, domain name system (domain name system, DNS) services, virtual private network (virtual private network, VPN) access, and firewall.

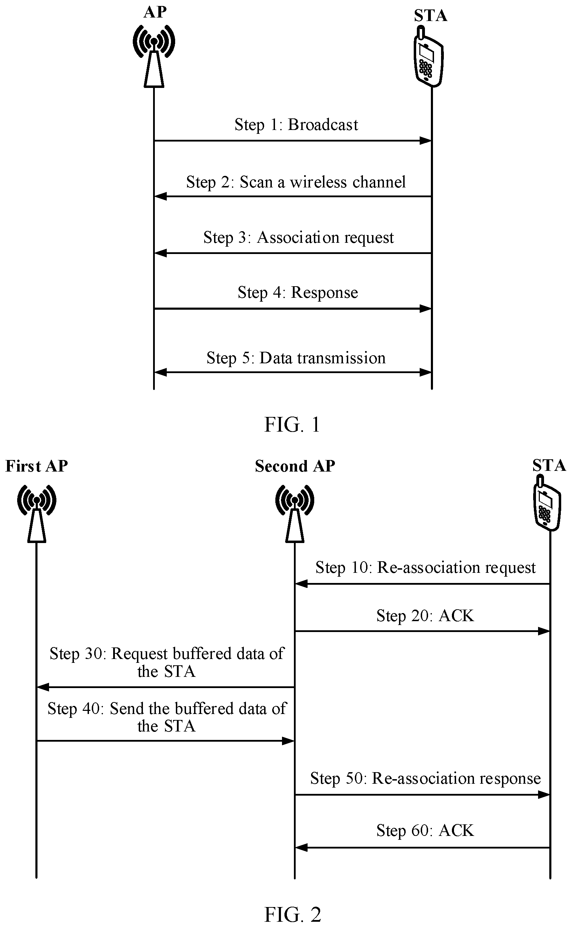

To describe this application more fully, the following briefly describes, with reference to FIG. 1, an example process in which a STA accesses an AP.

Step 1: An AP sends broadcast.

The AP may periodically broadcast a beacon signal to announce its existence and send a message to a STA within a coverage area of the AP, such as a beacon interval, a timestamp, a service set identifier (service set identifier, SSID), and other parameters.

Step 2: The STA scans a wireless channel.

Each STA can perform active scanning or passive scanning. In the active scanning, the STA actively detects and searches for a wireless network. In the passive scanning, the STA merely passively receives a radio signal sent by the AP.

In an active scanning situation, the STA may attempt to broadcast a probe request (probe request) to locate the AP. To be specific, the STA actively sends a probe signal on supported channels in sequence to detect surrounding wireless networks. The probe signal sent by the STA may be referred to as a probe request (probe request) frame. The probe request frame is a message satisfying a specific frame format, and the probe request frame includes address information of the STA. The probe request frame may be further classified into two types: One is that no SSID is specified, and the other is that an SSID is specified. If no SSID is specified in a probe request frame, the probe request frame is for requesting all available wireless network signals peripherally. All APs that receive the broadcast probe request frame respond to the STA and indicate their SSIDs. If a function of hiding an SSID in a beacon frame (Beacon frame) is configured in a wireless network of an AP, the AP does not respond to the broadcast probe request frame that is from the STA. As a result, the STA cannot obtain SSID information of the AP in this manner. If an SSID is specified in a probe request frame, after receiving the probe request frame, an AP responds to the STA when finding that the specified SSID in the probe request frame is the same as an SSID of the AP. After receiving the probe request frame, the AP sends a probe response (probe response) based on the address information of the STA, where the probe response is similar to a beacon. Based on the probe response, the STA may determine whether to connect to the AP.

In a passive scanning situation, the STA does not actively send a probe request packet, but passively listens to a beacon frame periodically broadcast by a surrounding AP. Once a beacon frame is detected, the STA then determines whether to connect to the AP. The beacon frame of the AP includes information such as an SSID of the AP and a supported rate. The AP periodically broadcasts the beacon frame to the outside. For example, a default period for sending the beacon frame by the AP may be 100 ms. In other words, the AP broadcasts the beacon frame once every 100 ms. The STA listens to a beacon frame on each channel supported by the STA to learn about a surrounding wireless network. It should be noted that, if a function of hiding an SSID in a beacon frame is configured in a wireless network, an SSID carried in a beacon frame sent by an AP is an empty character string. As a result, the STA cannot obtain SSID information from the beacon frame.

Whether the STA searches for a radio signal in active or passive scanning mode depends on whether the STA supports this mode. For example, a wireless network adapter of a mobile phone or a computer usually supports both of the two scanning modes. A wireless network detected through either active scanning or passive scanning is displayed in network connections of the mobile phone or the computer for a user to select. Typically, a VoIP voice terminal usually uses passive scanning to save power.

Step 3: The STA sends an association request (association request) to the AP.

Once the STA determines to connect to the AP, the STA sends a link authentication request and an association request regardless of a used scanning type. A link authentication manner may include open system authentication (open system authentication) and shared-key authentication (shared-key authentication). The open system authentication may be referred to as open authentication for short, and is also referred to as non-authentication. In the open authentication manner, the AP allows a successful authentication of the STA provided that the STA sends an authentication request. The open system authentication is an insecure authentication manner. Therefore, the open authentication manner is usually used together with another access authentication manner to improve security. In the shared-key authentication, the AP and the STA are configured with same keys. If the keys match, authentication succeeds.

After the link authentication succeeds, the STA may send the association request to the AP, where the association request may enable the AP to allocate a resource to the STA. An association request frame sent by the STA may include various information/parameters about the STA, and various parameters selected based on a service configuration, for example, a data rate, a channel, and quality of service (quality of service, QoS) supported by the STA, an SSID of the AP, or a selected access authentication and encryption algorithm.

Step 4: The AP sends an association response (association response) to the STA.

In response to the association request, the AP determines whether to grant the request; and if the request is granted, sends the STA a response frame indicating whether the request has been granted.

Step 5: The AP establishes a wireless connection to the STA to perform data transmission.

After the AP is associated with the STA, the STA may obtain an IP address, and then may further need to perform access authentication, key agreement, and the like. Finally, the STA can access a wireless network through the AP to perform data transmission.

### (6) Wireless access controller (access point controller, AC)

The wireless AC is an access control network device in a wireless local area network, is configured to control, configure, and manage one or more controllable wireless APs in the wireless local area network in a centralized manner, is responsible for aggregating data from APs and connecting to the network, and supports functions such as AP configuration management (such as delivery configuration and modifying a related configuration parameter), access user authentication and management, mobile roaming, broadband access, intelligent radio frequency management, and access security control.

The wireless AC may support a fast roaming function. With a plurality of fit APs as a border and in combination with fast management of a radio frequency management system, time for associating a wireless client with an AP can be greatly reduced, and a wireless adapter such as a mobile terminal can be quickly switched in a wireless network, thereby implementing the fast roaming function.

### (7) Roaming (roaming)

In embodiments of this application, a roaming function is a function of associating a terminal device with a new AP and disconnecting from an original AP when the terminal device moves to critical areas of coverage of the two APs, and an uninterrupted connection to an upper-layer application network is maintained in this process. A roaming mechanism can ensure uninterrupted communication of the terminal device in an AP switching process, meeting a requirement of seamless switching; and further ensure that an attribute and a permission of the terminal remain unchanged before and after the switching.

A roaming process is usually initiated and driven by a terminal device. A rule affecting whether the terminal device roams may be determined by a wireless network adapter manufacturer, and is usually defined by a received signal strength indicator (received signal strength indicator, RSSI) threshold. Different wireless network adapter manufacturers set different roaming thresholds of terminal devices. Therefore, when a plurality of terminal devices are associated with a same AP and receive same signal strength, some terminal devices start to roam, and some other terminal devices may still be associated with the original AP.

The RSSI threshold usually includes but is not limited to parameters such as signal strength, signal quality, a noise level, a bit error rate, and a quantity of missed beacon frames. When detecting that signal strength of an AP is lower than the preset RSSI threshold, the terminal device attempts to connect to another AP with stronger signal strength, and roams from a current basic service set (basic service set, BSS) to a new BSS. In this case, the terminal device sends a re-association request (re-association request) frame, and then starts a roaming process. Re-association refers to re-association with an SSID of a wireless network instead of re-association with an AP. For example, the RSSI threshold is set to -75 dBm. When the terminal device detects that an RSSI of an AP connected to the terminal device decreases to -76 dBm, the terminal device initiates roaming and connects to another AP with better signal strength.

In some embodiments, the roaming function may be implemented based on a fast basic service set transition (fast basic service set (BSS) transition, FT) mechanism of the IEEE 802.11r standard protocol. In a common case in which a client switches an AP, the client should perform an entire process of re-authentication and re-association, which causes an obvious interruption during AP switching. However, client roaming based on the 802.11r standard protocol does not require an authentication (such as open system authentication, WPA2-PSK authentication, and WPA2-802.1X authentication) process and a key agreement process, to reduce a quantity of times of information exchange. In this way, an interval for a client to switch between APs is significantly reduced, a delay of a service data flow during roaming is shortened, and a user cannot perceive an interruption of an upper-layer service, especially for a real-time uninterrupted communication service (for example, a voice or video application), thereby improving internet surfing experience of the user.

802.11r fast roaming supports the following two modes: 1. Over-the-air (over-the-air): The client directly communicates with a target AP based on IEEE 802.11 authentication and FT authentication algorithms. 2. Over-the-distributed-system (over-the-DS): The client communicates with a target AP through a current AP. Communication information is encapsulated in an FT action data frame of the client and the current AP. The current AP communicates with the target AP in another different encapsulation mode. The current AP performs conversion between the two encapsulation modes.

In addition to 802.11r, 802.11k and 802.11v are also common seamless roaming protocols. For example, the IEEE 802.11k protocol specifies a spectrum measurement specification in a wireless local area network, and formulation of the specification reflects a requirement of the wireless local area network for intelligent use of spectrum resources. In addition, the 802.11k standard further provides criteria for channel selection, roaming services, and transmission power control in the wireless local area network. For specific content, refer to the standard document. Details are not described herein.

With reference to FIG. 2, the following uses an example in which a STAfirst establishes a connection to a first AP and roams from the first AP (an original AP) to a second AP (a target AP) to describe a process in which the STA switches an AP through roaming. A roaming mechanism can ensure uninterrupted communication of a terminal in an AP switching process, meet a requirement of seamless switching, and further ensure that an attribute and a permission of the terminal remain unchanged before and after the switching. Specific steps are as follows:

Step 10: The STA sends a re-association request to the second AP, where a re-association request frame includes a basic service set identifier (basic service set identifier, BSSID) of the first AP that is currently connected, and the BSSID refers to a MAC address of the AP.

Step 20: The second AP responds to the STA by using an ACK frame.

Step 30: The second AP communicates with the first AP by using a distribution system medium (distribution system medium, DSM), attempts to notify the first AP of information about starting roaming of the STA, and requests the first AP to forward all buffered data of the roaming STA.

Step 40: If the communication succeeds, the first AP forwards all the buffered data to the second AP by using the DSM.

Step 50: The second AP sends a re-association response frame to the STA by using a wireless network.

Step 60: The STA sends an ACK frame to the second AP.

If the re-association fails, the STA maintains a connection to the first AP, and attempts to roam to another target AP.

If the re-association succeeds, the second AP sends the forwarded buffered data to the STA by using the wireless network. After receiving the data, the STA sends an ACK to the second AP to acknowledge that the data is received.

The roaming process may include the foregoing steps. When the STA is disconnected from the first AP, the STA establishes a communication connection to the second AP, and the second AP starts to process a frame for the STA, it means that the roaming process is ended.

In some embodiments, when a terminal device detects that signal strength of the first AP is lower than a threshold A, the terminal device initiates roaming, and switches to access the second AP that has a same SSID, password, encryption manner, and the like as the first AP. Because the second AP and the first AP have same settings such as the SSID, the password, and the encryption manner, the terminal device does not need to be authenticated again when roaming to access the second AP.

That the terminal device switches to access the second AP from the first AP through roaming means that the terminal device is disconnected from the first AP and establishes the connection to the second AP. In some embodiments, when the terminal device roams, the terminal device may first disconnect an old link to the first AP, and then establish a new link to the second AP; may first establish a new link to the second AP, and then disconnect an old link to the first AP; or may establish a new link while maintaining an old link, where the old link is not actively disconnected, and waits for being discarded. In some embodiments, the terminal device may not be disconnected from the first AP during roaming. In other words, the terminal device does not actively send a disassociation or deauthentication packet to the first AP, but directly establishes a link to the second AP. In this case, the terminal device usually maintains "information about two clients", where one is a client in a "link success state" on the first AP, and the other is a client in a "linking state" on the second AP. After a final state is converged, there is only one client in the "link success state" on the terminal device. Certainly, the client may be a "terminal device" that successfully roams to the second AP, or may be a "terminal device" that still stays on the first AP without successfully roaming.

It should be noted that the foregoing examples are merely some implementations provided in this application, and should not constitute a limitation on other embodiments of this application.

The following describes a structure of a terminal device 100 provided in embodiments of this application.

In embodiments of this application, the terminal device 100 may be movable, or may be at a fixed location. This is not limited in embodiments. The terminal device 100 in embodiments of this application may be a mobile phone (mobile phone), a tablet computer (Pad), a portable computer, a mobile vehicle, a CPE, a mobile smart home device, a handheld device, a vehicle-mounted device, a wearable device, a virtual reality (virtual reality, VR) terminal device, an augmented reality (augmented reality, AR) terminal device, a terminal in industrial control (industrial control), a terminal in self-driving (self-driving), a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this application. In embodiments of this application, the terminal device 100 may include a CPE. The CPE may establish a wireless connection to another AP, and access various types of networks such as the Internet and a local area network via an AP in an area.

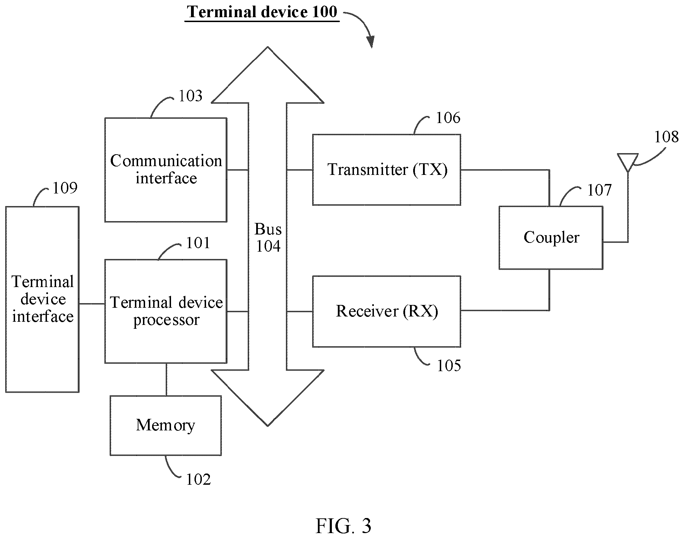

FIG. 3 shows an example of a structure of the terminal device 100 according to an embodiment of this application.

As shown in FIG. 3, the terminal device 100 may include one or more terminal device processors 101, a memory 102, a communication interface 103, a receiver 105, a transmitter 106, a coupler 107, an antenna 108, and a terminal device interface 109. These components may be connected through a bus 104 or in another manner. In FIG. 3, an example in which the components are connected through the bus 104 is used.

The terminal device processor 101 is a control center of the terminal device 100, is connected to various parts of the terminal device 100 through various interfaces and lines, and may be configured to read and execute computer-readable instructions. Specifically, the terminal device processor 101 may be configured to invoke a program or data stored in the memory 102, and execute instructions included in the program, to implement various functions of the terminal device 100. In some embodiments, the terminal device processor 101 may include one or more processing units. The terminal device processor 101 may further integrate an application processor and a modem processor. The application processor is mainly configured to process an operating system, a user interface, an application program, and the like. The modem processor is mainly configured to process wireless communication. It may be understood that the modem processor may not be integrated into the terminal device processor 101. In some embodiments, the terminal device processor 101 may be further configured to perform wireless channel management, implement call and communication link establishment and disconnection, provide cell handover control for a user in a local control area, and the like. Specifically, the terminal device processor 101 may include an administration/communication module (administration module/communication module, AM/CM) (used in a speech channel switching and information exchange center), a basic module (basic module, BM) (configured to complete call processing, signaling processing, radio resource management, radio link management, and circuit maintenance functions), a transcoder and submultiplexer (transcoder and submultiplexer, TCSM) (configured to complete multiplexing/demultiplexing and transcoding functions), and the like.

The memory 102 is coupled to the terminal device processor 101, and is configured to store various software programs and/or a plurality of groups of instructions. Specifically, the memory 102 may include a high-speed random access memory, and may further include a nonvolatile memory, for example, one or more disk storage devices, a flash memory device, or another nonvolatile solid-state storage device. The memory 102 may store an operating system, for example, an embedded operating system. The memory 102 may further store a network communication program, and the network communication program may be for communicating with one or more additional devices, one or more terminal devices, and one or more network devices. The memory 102 may further store a terminal device interface program. The terminal device interface program may vividly display content of an application program via a graphical operation interface, and receive, via an input control such as a menu, a dialog box, and a key, a control operation performed by the terminal device on the application program. In some embodiments of this application, the memory 102 may be configured to store an implementation program of the method provided in one or more embodiments of this application on a side of the terminal device 100.

The terminal device 100 may include a mobile communication module, a wireless communication module, and the like.

The mobile communication module may provide a wireless communication solution, such as 2G/3G/4G/5G, that is applied to the terminal device 100. The mobile communication module may include at least one filter, a switch, a power amplifier, a low noise amplifier (low noise amplifier, LNA), and the like. The mobile communication module may receive an electromagnetic wave through the antenna 108, perform processing such as filtering and amplification on the received electromagnetic wave, and send a processed electromagnetic wave to the modem processor for demodulation. The mobile communication module may further amplify a signal modulated by the modem processor, and convert the signal into an electromagnetic wave for radiation through the antenna 108.

The terminal device 100 may be provided with a subscriber identification module (subscriber identification module, SIM) card interface, and the SIM card interface is configured to connect to a SIM card. The SIM card is a subscriber identification card of a digital cellular mobile device, and is for mobile communication. The SIM card stores user information, an encryption key, and the like of the digital mobile device, and may be used by a mobile network to authenticate a user identity and encrypt user information. The SIM card may be inserted into the SIM card interface or removed from the SIM card interface, to implement contact with or separation from the terminal device 100. The terminal device 100 may support one or N SIM card interfaces, where N is a positive integer greater than 1. The SIM card interface may support a nano-SIM card, a micro-SIM card, a SIM card, and the like. A plurality of cards may be simultaneously inserted into a same SIM card interface. The plurality of cards may be of a same type or different types. The SIM card interface is also compatible with different types of SIM cards. The SIM card interface is also compatible with an external storage card. The terminal device 100 interacts with a network through the SIM card, to implement functions such as conversation and data communication.

The wireless communication module may provide a wireless communication solution that includes a wireless local area network (wireless local area network, WLAN) (for example, a Wi-Fi network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device 100. The wireless communication module may be one or more components that integrate at least one communication processing module. The wireless communication module receives an electromagnetic wave by the antenna 108, performs frequency modulation and filtering processing on the electromagnetic wave signal, and sends a processed signal to the processor. The wireless communication module may further receive a to-be-sent signal from the processor, perform frequency modulation and amplification on the signal, and convert the signal into an electromagnetic wave for radiation through the antenna 108.

In some embodiments, one or more antennas 108 of the terminal device 100 are separately coupled to the mobile communication module and the wireless communication module, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite-based augmentation system (satellite-based augmentation systems, SBAS).

In some embodiments, the wireless communication module may include a Wi-Fi module, configured to provide, for the terminal device 100, network access that complies with a Wi-Fi-related standard protocol. The terminal device 100 may access an AP through the Wi-Fi module. Alternatively, the terminal device 100 including the Wi-Fi module may be used as an AP to provide Wi-Fi network access for another electronic device. It may be understood that the Wi-Fi-related standard protocol may include IEEE 802.11ac, IEEE 802.11b, IEEE 802.11g/a, and/or IEEE 802.11n. The Wi-Fi module may provide at least two Wi-Fi APs, and the two Wi-Fi APs may respectively operate on a 5 GHz frequency band and a 2.4 GHz frequency band. The Wi-Fi AP on the 5 GHz frequency band may provide a higher wireless transmission rate. For example, a minimum wireless transmission rate of the Wi-Fi AP may reach 433 Mbps. After some high-performance terminal devices are connected to the Wi-Fi AP operating on the 5 GHz frequency band, a wireless transmission rate of the terminal devices may even reach 1 Gbps or higher.

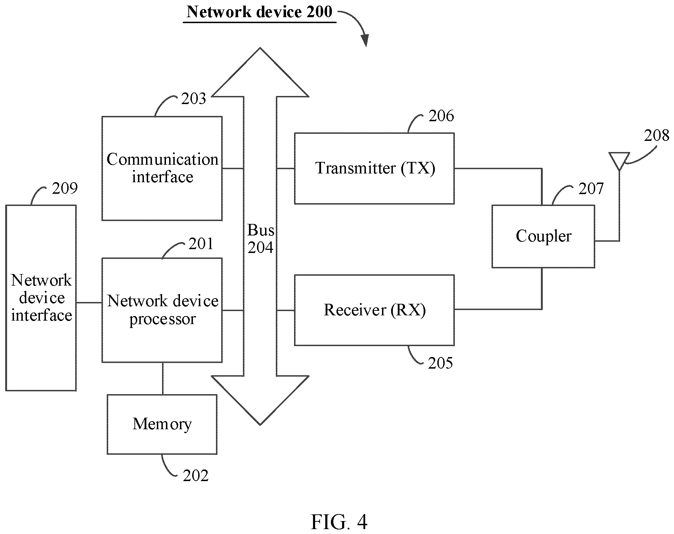

The communication interface 103 may be used by the terminal device 100 to communicate with another communication device, for example, a network device. Specifically, the network device may be a network device 200 shown in FIG. 4. Specifically, the communication interface 103 may be a long term evolution (LTE) (4G) communication interface, a 5G communication interface, or a future new radio (new radio, NR) communication interface. In addition to a wireless communication interface, the terminal device 100 may be further configured with a wired communication interface 103, for example, a local area network (local access network, LAN) interface, to support wired communication. The transmitter 106 may be configured to perform transmission processing on a signal output by the terminal device processor 101. The receiver 105 may be configured to perform receiving processing on a mobile communication signal received by the antenna 108.

In some embodiments of this application, the transmitter 106 and the receiver 105 may be considered as a wireless modem. In the terminal device 100, there may be one or more transmitters 106 and receivers 105. The antenna 108 may be configured to convert electromagnetic energy in a transmission line into an electromagnetic wave in free space, or convert an electromagnetic wave in the free space into electromagnetic energy in the transmission line. The coupler 107 is configured to divide a mobile communication signal received by the antenna 108 into a plurality of signals, and allocate the plurality of signals to the plurality of receivers 105. Each antenna in the terminal device 100 may be configured to cover one or more communication frequency bands. Different antennas may be further reused, to improve antenna utilization. For example, an antenna for mobile communication may be reused as a diversity antenna of a wireless local area network. In some other embodiments, the antenna 108 may be used in combination with a tuning switch.

The terminal device 100 may further include an input/output module. The input/output module may be configured to implement interaction between the terminal device 100 and another terminal device/an external environment, and may mainly include an audio input/output module, a key input module, a display, and the like. Specifically, the input/output module may further include a camera, a touchscreen, a sensor, and the like. The input/output module communicates with the terminal device processor 101 through the terminal device interface 109.

It should be noted that the terminal device 100 shown in FIG. 3 is merely an implementation of embodiments of this application. In actual application, the terminal device 100 may further include more or fewer components, and may combine two or more components, combine some components, split some components, or have different component arrangements. The components shown in the figure may be implemented by hardware, software, or a combination of software and hardware. This is not limited herein.

The following describes a structure of a network device 200 provided in embodiments of this application.

In embodiments of this application, the network device 200 may include various forms of network devices, including but not limited to: a macro base station, a micro base station (also referred to as a small cell), a relay station, a wireless access point AP, a gateway device, a router, a network edge device, a wireless local area network (wireless local area network (WLAN) access point controller, WAC), a radio network controller (radio network controller, RNC), a NodeB (NodeB, NB), a base transceiver station (base transceiver station, BTS) in a TD-SCDMA system, an evolved NodeB (evolved NodeB, eNB) in an LTE system, a next generation NodeB (next Generation NodeB, gNB) in a 5G system or a new radio system, a base station controller (base station controller, BSC), a home base station (for example, a home evolved NodeB, or a home NodeB, HNB), a transmission reception point (transmission reception point, TRP), a transmission point (transmission point, TP), or a network node that forms a gNB or a transmission point, for example, a baseband unit (baseband unit, BBU), a distributed unit (distribution unit, DU), a central unit (central unit, CU), or another network entity. In addition, some or all of functions of the foregoing network entities may be included.

A specific radio access technology and a specific device form used by the network device 200 are not limited in embodiments of this application. In embodiments of this application, the network device 200 may be an access device, such as an AP, that has a wireless transceiver function and via which a terminal device (for example, a CPE or a mobile device) accesses a communication system in a wireless manner. In some scenarios, a plurality of network devices may belong to a same local area network, for example, a campus network.

FIG. 4 shows an example of a structure of the network device 200 according to an embodiment of this application.

As shown in FIG. 4, the network device 200 may include one or more network device processors 201, a memory 202, a communication interface 203, a receiver 205, a transmitter 206, a coupler 207, an antenna 208, and a network device interface 209. These components may be connected through a bus 204 or in another manner. In FIG. 4, an example in which the components are connected through the bus 204 is used.

The network device processor 201 is a control center of the network device 200, is connected to various parts of the network device 200 through various interfaces and lines, and may be configured to read and execute computer-readable instructions. Specifically, the network device processor 201 may be configured to invoke a program or data stored in the memory 202, and execute instructions included in the program, to implement various functions of the network device 200. In some embodiments, the network device processor 201 may include one or more processing units. The network device processor 201 may further integrate an application processor and a modem processor. The application processor is mainly configured to process an operating system, a user interface, an application program, and the like. The modem processor is mainly configured to process wireless communication. It may be understood that the modem processor may not be integrated into the network device processor 201. In some embodiments, the network device processor 201 may be further configured to perform wireless channel management, implement call and communication link establishment and disconnection, provide cell handover control for a user in a local control area, and the like.

The memory 202 is coupled to the network device processor 201, and is configured to store various software programs and/or a plurality of groups of instructions. Specifically, the memory 202 may include a high-speed random access memory, and may further include a nonvolatile memory, for example, one or more disk storage devices, a flash memory device, or another nonvolatile solid-state storage device. The memory 202 may store a network communication program, and the network communication program may be for communicating with one or more additional devices, one or more terminal devices, and one or more network devices. In some embodiments of this application, the memory 202 may be configured to store an implementation program of the method provided in one or more embodiments of this application on a side of the network device 200.

The network device 200 may include a mobile communication module, a wireless communication module, and the like.

The mobile communication module may provide a wireless communication solution, such as 2G/3G/4G/5G, that is applied to the network device 200. The mobile communication module may include at least one filter, a switch, a power amplifier, a low noise amplifier, and the like. The mobile communication module may receive an electromagnetic wave through the antenna 208, perform processing such as filtering and amplification on the received electromagnetic wave, and send a processed electromagnetic wave to the modem processor for demodulation. The mobile communication module may further amplify a signal modulated by the modem processor, and convert the signal into an electromagnetic wave for radiation through the antenna 208. A SIM card interface may be disposed in the network device 200, and the SIM card interface is configured to connect to a SIM card. The network device 200 interacts with a network through the SIM card, to implement functions such as conversation and data communication.

The wireless communication module may provide a wireless communication solution that is applied to the network device 200 and that includes a WLAN (for example, a Wi-Fi network), BT, a GNSS, FM, NFC, IR, and the like. The wireless communication module may be one or more components that integrate at least one communication processing module. The wireless communication module receives an electromagnetic wave by the antenna 208, performs frequency modulation and filtering processing on the electromagnetic wave signal, and sends a processed signal to the processor. The wireless communication module may further receive a to-be-sent signal from the processor, perform frequency modulation and amplification on the signal, and convert the signal into an electromagnetic wave for radiation through the antenna 208.

In some embodiments, one or more antennas 208 of the network device 200 are separately coupled to the mobile communication module and the wireless communication module, so that the network device 200 can communicate with a network and another device by using a wireless communication technology. The wireless communication technology may include technologies such as GSM, GPRS, CDMA, WCDMA, TD-SCDMA, LTE, BT, GNSS, WLAN, NFC, FM, and/or IR.

In some embodiments, the wireless communication module may include a Wi-Fi module, configured to provide, for the network device 200, network access that complies with a Wi-Fi-related standard protocol. The network device 200 may access an AP through the Wi-Fi module. Alternatively, the network device 200 including the Wi-Fi module may be used as an AP to provide Wi-Fi network access for another electronic device. It may be understood that the Wi-Fi-related standard protocol may include IEEE 802.11ac, IEEE 802.11b, IEEE 802.11g/a, and/or IEEE 802.11n. The Wi-Fi module may provide at least two Wi-Fi APs, and the two Wi-Fi APs may respectively operate on a 5 GHz frequency band and a 2.4 GHz frequency band.

The communication interface 203 may be used by the network device 200 to communicate with another communication device, for example, a terminal device. Specifically, the terminal device may be the terminal device 100 shown in FIG. 3. Specifically, the communication interface 203 may be a 5G communication interface, or may be a future new radio communication interface. In addition to a wireless communication interface, the network device 200 may be further configured with a wired communication interface 203, for example, a LAN interface. The transmitter 206 may be configured to perform transmission processing on a signal output by the network device processor 201. The receiver 205 may be configured to perform receiving processing on a mobile communication signal received by the antenna 208.

In some embodiments of this application, the transmitter 206 and the receiver 205 may be considered as a wireless modem. In the network device 200, there may be one or more transmitters 206 and receivers 205. The antenna 208 may be configured to convert electromagnetic energy in a transmission line into an electromagnetic wave in free space, or convert an electromagnetic wave in the free space into electromagnetic energy in the transmission line. The coupler 207 is configured to divide a mobile communication signal received by the antenna 208 into a plurality of signals, and allocate the plurality of signals to the plurality of receivers 205. Each antenna in the terminal device 100 may be configured to cover one or more communication frequency bands. Different antennas may be further reused, to improve antenna utilization. For example, an antenna for mobile communication may be reused as a diversity antenna of a wireless local area network. In some other embodiments, the antenna 208 may be used in combination with a tuning switch.

It should be noted that the network device 200 shown in FIG. 4 is merely an implementation of embodiments of this application. In actual application, the network device 200 may further include more or fewer components, and may combine two or more components, combine some components, split some components, or have different component arrangements. The components shown in the figure may be implemented by hardware, software, or a combination of software and hardware. This is not limited herein.

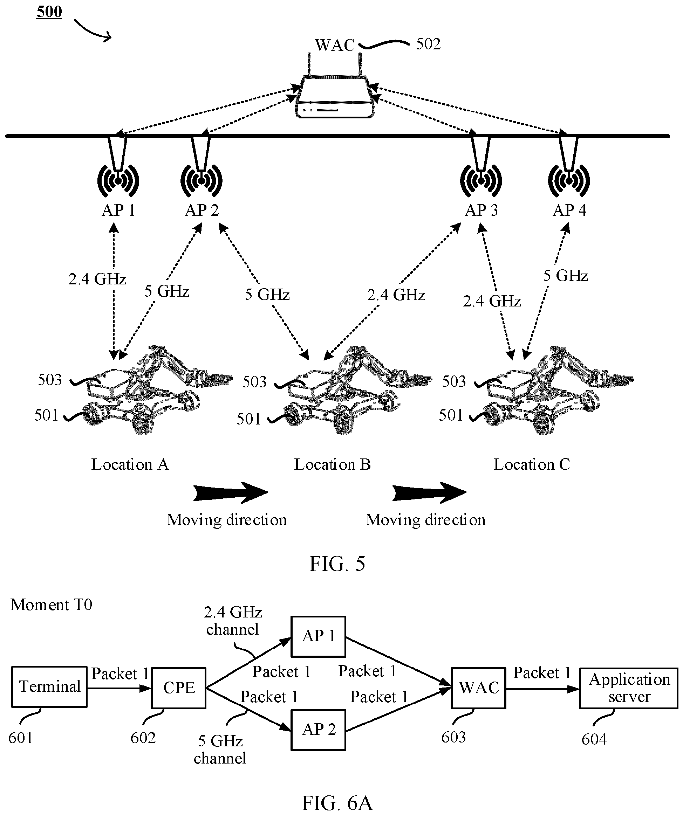

FIG. 5 shows an example of an application scenario 500 according to an embodiment of this application. This application provides a roaming solution, to resolve a problem of a packet loss during data transmission in a roaming scenario. In this solution, based on a WLAN dual fed and selective receiving mode, roaming processes of two radio frequency modules are uniformly and cooperatively controlled, to ensure that there is always a reliable wireless connection available for service packet processing in the roaming processes. According to the technical solution of this application, in a WLAN dual fed and selective receiving roaming scenario, packet transmission reliability can be improved, and a loss that may be caused by a lost transmitted packet can be avoided.

In the example application scenario 500, a CPE 503 may be mounted on a mobile vehicle 501 in a production line, to convert an input wired network signal, cellular network signal, wireless network signal, or the like into a wireless network signal, and perform wireless connection to an AP through the CPE 503, to perform network access communication. In this way, the mobile vehicle 501 may be free from a constraint of a fixed network cable and is not restricted by an insufficient quantity of reserved network interfaces, and production line rearrangement becomes easy. In addition, an activity range may be extended, and communication may be implemented in a place covered by the AP. The CPE 503 of the mobile vehicle 501 may include a radio frequency module A and a radio frequency module B. In an example, the radio frequency module A is for communication on a 2.4 GHz frequency band, and the radio frequency module B is for communication on a 5 GHz frequency band.

In the application scenario 500, the mobile vehicle 501 is in a moving process, and a moving direction is moving from a location A to a location C through a location B, to be specific, moving from the location A close to an AP 1 and an AP 2 and away from an AP 3 and an AP 4 to the location C close to the AP 3 and the AP 4 and away from the AP 1 and the AP 2. The AP 1 and the AP 3 may have same settings such as an SSID, a password, an encryption manner, and an operating frequency band (that is, 2.4 GHz), and support seamless roaming of the CPE 503 between the AP 1 and the AP 3. The AP 2 and the AP 4 may have same settings such as an SSID, a password, an encryption manner, and an operating frequency band (that is, 5 GHz), and support seamless roaming of the CPE 503 between the AP 2 and the AP 4.

In the application scenario 500, reliability of data transmission in a wireless network is improved by using a dual fed and selective receiving mode. The CPE 503 on the mobile vehicle 501 may replicate a received packet to obtain a same packet, add a same numerical label to the two same packets, and then send the two same packets through the radio frequency module A and the radio frequency module B respectively, that is, send the same packets through two channels of the 2.4 GHz frequency band and the 5 GHz frequency band respectively. The two packets arrive at a WLAN AC (WAC) 502 successively, and the WAC 502 selects a packet that arrives earlier for subsequent transmission, and deletes a duplicate packet that arrives later, to ensure reliability of data transmission in the wireless network. The WAC 502 identifies, by using the same numerical label in the packets, the packet that arrived later as a duplicate packet that has been received.

Network devices such as one or more WACs and one or more APs may belong to a same wireless local area network. In the example in FIG. 5, the WAC 502 may manage a plurality of APs, for example, the AP 1, the AP 2, the AP 3, and the AP 4. As negotiated, an operating frequency band of the AP 1 is the 2.4 GHz frequency band, an operating frequency band of the AP 2 is the 5 GHz frequency band, an operating frequency band of the AP 3 is the 2.4 GHz frequency band, and an operating frequency band of the AP 4 is the 5 GHz frequency band.

At the location A, it may be detected that signal strength of the AP 1 and the AP 2 is stronger and signal strength of the AP 3 and the AP 4 is weaker. The radio frequency module A of the CPE 503 accesses the AP 1, the radio frequency module B accesses the AP 2, and the CPE 503 sends same packets through two channels of the 2.4 GHz frequency band and the 5 GHz frequency band respectively. After receiving the packets, the WAC 502 selects one of the packets for subsequent transmission, and deletes the other duplicate packet.

The CPE 503 associates a connection of the radio frequency module A with a connection of the radio frequency module B, and compares radio frequency signal conditions.

In a process in which the mobile vehicle 501 moves from the location A to the location B, the CPE 503 detects that radio signal conditions of the AP 1 and the AP 2 become weak. Assuming that signal strength of a connection between the CPE 503 and the AP 1 is poorer than signal strength of a connection between the CPE 503 and the AP 2, or signal strength received by the radio frequency module A reaches a roaming threshold earlier than signal strength received by the radio frequency module B, the CPE 503 starts a roaming process of the radio frequency module A, that is, selects a radio frequency connection with a poorer signal condition to start roaming first. In addition, the CPE 503 suppresses a roaming request of the radio frequency module B to ensure that the two radio frequency connections are not for simultaneous roaming and that there is always a channel available for service processing. Therefore, when one radio frequency connection temporarily interrupts packet transmission due to a roaming process, the other radio frequency connection does not enter the roaming process, thereby ensuring timely packet transmission.

First, it is detected that signal strength of the AP 1 received by the radio frequency module A is lower than a threshold A. The CPE 503 enables the radio frequency module A to initiate roaming, and switches to the AP 3 with stronger access signal strength. The AP 1 and the AP 3 may have same settings such as an SSID, a password, an encryption manner, and an operating frequency band (that is, 2.4 GHz). When the CPE 503 roams to the AP 3 from the AP 1, authentication is not required again. After roaming to the AP 3, the radio frequency module A of the CPE 503 is disconnected from the AP 1.

At the location B, the radio frequency module A of the CPE 503 accesses the AP 3 through roaming, establishes a communication connection to the AP 3, and sends a packet through a channel of the 2.4 GHz frequency band. The radio frequency module B still maintains a connection to the AP 2, and sends a packet through a channel of the 5 GHz frequency band. The radio frequency module A and the radio frequency module B send the same packets, and then forward the packets to the WAC 502 through the AP 3 and the AP 2. The WAC 502 may receive two packets, and then select one packet for subsequent transmission and delete the other duplicate packet.

After roaming of the radio frequency module A of the CPE 503 is ended, and a service is restored, the CPE 503 responds to the roaming application, and starts a roaming process of the radio frequency module B.

Then, it is detected that signal strength of the AP 2 received by the radio frequency module B is lower than a threshold B, and the CPE 503 initiates roaming, and switches to the AP 4 with stronger access signal strength. The AP 2 and the AP 4 may have same settings such as an SSID, a password, an encryption manner, and an operating frequency band (that is, 5 GHz). When the CPE 503 roams to the AP 4 from the AP 2, authentication is not required again. After roaming to the AP 4, the CPE 503 is disconnected from the AP 2.

Before and after the roaming process of the radio frequency module A or the radio frequency module B of the CPE 503, similarly, after receiving the packets from the radio frequency module A or the radio frequency module B successively, the WAC 502 selects one of the packets for subsequent transmission, and deletes the other duplicate packet.

At the location C, it may be detected that signal strength of the AP 3 and the AP 4 is stronger and signal strength of the AP 1 and the AP 2 is weaker. The radio frequency module A of the CPE 503 accesses the AP 3, the radio frequency module B accesses the AP 4, and the CPE 503 sends same packets through two channels of the 2.4 GHz frequency band and the 5 GHz frequency band respectively. After receiving the packets, the WAC 502 selects one of the packets for subsequent transmission, and deletes the other duplicate packet.

The CPE 503 continuously monitors radio frequency signal conditions of the connections of the radio frequency module A and the radio frequency module B that are associated, for subsequent roaming.

It should be noted that the example application scenario 500 shown in FIG. 5 is merely intended to describe the technical solutions of this application more clearly, and does not constitute a limitation on this application. The application scenario 500 may further include more or fewer terminal devices and network devices, and more or fewer communication connections. This is not limited herein. In embodiments of this application, the network device and the terminal device may also be referred to as communication devices. A person of ordinary skill in the art may learn that, with evolution of a network architecture and emergence of a new service scenario, the technical solutions provided in this application are also applicable to resolving similar technical problems.

With reference to FIG. 6A to FIG. 6D, the following describes an embodiment provided in a roaming solution of this application.

The embodiment of FIG. 6A to FIG. 6D shows a case in which a terminal 601 roams in a process of continuously sending a packet to an application server 604 based on a dual fed and selective receiving mode. In this embodiment, based on a WLAN dual fed and selective receiving mode, a CPE 602 uniformly and cooperatively controls roaming processes of two radio frequencies, to ensure that there is always a reliable wireless connection available for service packet processing in the roaming processes. According to this embodiment, in the WLAN dual fed and selective receiving roaming scenario, packet transmission reliability of a terminal can be improved, and a loss that may be caused by a lost transmitted packet can be avoided.

In this embodiment, the CPE 602 (for example, the CPE 503) may be mounted on a terminal (STA) 601 (for example, the mobile vehicle 501). The CPE 602 may convert an input wired network signal, cellular network signal, wireless network signal, or the like into a wireless network signal. The terminal is wirelessly connected to an AP through the CPE 602, to implement network access communication. In this way, the terminal 601 may be free from a constraint of a fixed network cable and is not restricted by an insufficient quantity of reserved network interfaces. In addition, an activity range may be extended, and communication may be implemented in a place covered by the AP.

In this embodiment, a process in which the terminal 601 sends a packet 1 to the application server (Server) 604 includes: The terminal 601 sends the packet 1 to the CPE 602, and the packet 1 arrives at the CPE 602 through a wired connection. The CPE 602 sends the packet 1 from the terminal 601 to the AP, and the packet 1 is forwarded by the AP to a WLAN AC (WAC) 603. The WAC 603 further forwards the packet 1 to the application server (Server) 604. After the foregoing process, the terminal 601 finally sends the packet 1 to the application server 603.

The CPE 602 on the terminal 601 may include a radio frequency module A and a radio frequency module B. In an example, the radio frequency module A is for communication on a 2.4 GHz frequency band, and the radio frequency module B is for communication on a 5 GHz frequency band. In this example, reliability of data transmission in a wireless network is improved by using the dual fed and selective receiving mode. The CPE 602 may replicate a received packet to obtain a same packet, add a same numerical label to the two same packets, and then send the two same packets through the radio frequency module A and the radio frequency module B respectively, that is, send the same packets through two channels of the 2.4 GHz frequency band and the 5 GHz frequency band respectively. The two packets arrive at the WLAN AC (WAC) 603 successively, and the WAC 603 selects a packet that arrives earlier for subsequent transmission, and deletes a duplicate packet that arrives later, to ensure reliability of data transmission in the wireless network. The WAC 603 identifies, by using the same numerical label in the packets, the packet that arrived later as a duplicate packet that has been received.

Network devices such as one or more WACs and one or more APs may belong to a same wireless local area network. In the example in FIG. 6A to FIG. 6D, the WAC 603 may manage a plurality of APs, for example, the AP 1, the AP 2, the AP 3, and the AP 4. As negotiated, an operating frequency band of the AP 1 is the 2.4 GHz frequency band, an operating frequency band of the AP 2 is the 5 GHz frequency band, an operating frequency band of the AP 3 is the 2.4 GHz frequency band, and an operating frequency band of the AP 4 is the 5 GHz frequency band.

Refer to FIG. 6A. At a moment T0, it may be detected that signal strength of the AP 1 and the AP 2 is stronger. The radio frequency module A of the CPE 602 accesses the AP 1, and the radio frequency module B accesses the AP 2. In other words, the CPE 602 separately establishes a connection to the AP 1 and the AP 2. The AP 1 corresponds to a connection channel of the 2.4 GHz operating frequency band, and the AP 2 corresponds to a connection channel of the 5 GHz operating frequency band. The CPE 602 sends two same packets 1 of the received packet 1 of the terminal 601 through the two channels of the 2.4 GHz frequency band and the 5 GHz frequency band respectively. After receiving the two packets 1 from the AP 1 and the AP 2 successively, the WAC 603 selects a packet 1 that arrives earlier, sends the packet 1 to the application server 604, and deletes the other duplicate packet 1 that arrives later.

The CPE 602 may associate a connection of the radio frequency module A with a connection of the radio frequency module B, and compares radio frequency signal conditions.

At a moment, the CPE 602 detects that radio signals of the AP 1 and the AP 2 become weak. Assuming that the signal strength of the AP 1 is poorer than the signal strength of the AP 2, and signal strength received by the radio frequency module A reaches a threshold for requesting roaming earlier than signal strength received by the radio frequency module B, the CPE 602 starts a roaming process of the radio frequency module A, that is, selects a radio frequency connection with a poorer signal to start roaming first. In addition, the CPE 602 suppresses a roaming request of the radio frequency module B to ensure that the two radio frequency connections are not for simultaneous roaming and that there is always a channel available for service processing. Therefore, when one radio frequency connection temporarily interrupts packet transmission due to a roaming process, the other radio frequency connection does not enter the roaming process, thereby ensuring timely packet transmission.

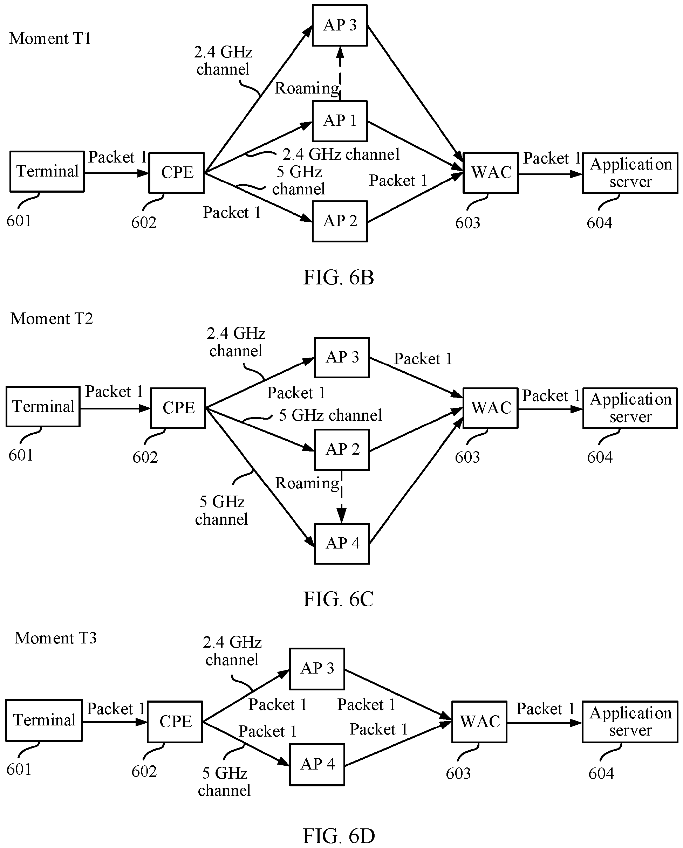

Refer to FIG. 6B. At a moment T1 after the moment T0, when it is detected that signal strength of a packet transmission channel corresponding to the radio frequency module A is poorer than signal strength of a packet transmission channel corresponding to the radio frequency module B, and the signal strength of the packet transmission channel corresponding to the radio frequency module A is less than or equal to a threshold A (for example, a first threshold or a third threshold), the CPE 602 initiates roaming, so that the radio frequency module A switches to the AP 3 with stronger signal strength, the AP 1 and the AP 3 may have same settings such as an SSID, a password, an encryption mode, and an operating frequency band (that is, 2.4 GHz). When the CPE 602 roams to the AP 3 through the AP 1, authentication is not required again. After roaming to the AP 3, the CPE 602 is disconnected from the AP 1.

In a process in which the radio frequency module A roams to the AP 3 from the AP 1, the CPE 602 may ensure that the radio frequency module B does not enter a roaming process. Therefore, the CPE 602 may ensure that the radio frequency module B sends the packet 1 to the AP 2 in a timely manner through the channel of the 5 GHz frequency band, then the AP 2 transmits the received packet 1 to the WAC 603 in a timely manner, and the WAC 603 transmits the packet 1 to the application server 604 in a timely manner.

After roaming of the radio frequency module A of the CPE 602 is ended, and a service is restored, the CPE 602 starts a roaming process of the radio frequency module B.

Refer to FIG. 6C. At a moment T2 after the moment T1, the radio frequency module A of the CPE 602 has accessed the AP 3, and sends the received packet 1 of the terminal 601 to the AP 3 through the channel of the 2.4 GHz frequency band. The AP 3 forwards the received packet 1 to the WAC 603, and the WAC 603 then transmits the packet 1 to the application server 604 in a timely manner. Then, it is detected that signal strength of a packet transmission channel corresponding to the radio frequency module B is lower than a threshold B (for example, a second threshold), and the CPE 602 initiates roaming, so that the radio frequency module B switches to the AP 4 with stronger access signal strength. The AP 2 and the AP 4 may have same settings such as an SSID, a password, an encryption manner, and an operating frequency band (that is, 5 GHz). When the CPE 602 roams to the AP 4 from the AP 2, authentication is not required again. After roaming to the AP 4, the CPE 602 is disconnected from the AP 2.

In a process in which the radio frequency module B roams to the AP 4 from the AP 2, the CPE 602 may ensure that the radio frequency module A does not enter a roaming process. Therefore, the CPE 602 may ensure that the radio frequency module A sends the packet 1 to the AP 3 in a timely manner through the channel of the 2.4 GHz frequency band, then the AP 3 transmits the received packet 1 to the WAC 603 in a timely manner, and the WAC 603 transmits the packet 1 to the application server 604 in a timely manner.

Before and after the roaming process of the radio frequency module A or the radio frequency module B of the CPE 602, similarly, after receiving the two packets from the radio frequency module A or the radio frequency module B successively, the WAC 603 selects a packet 1 that arrives earlier and transmits the packet to the application server 604, and deletes the other duplicate packet 1 that arrives later.

Refer to FIG. 6D. At a moment T3 after the moment T2, the radio frequency module B of the CPE 602 ends roaming and restores a service. It may be detected that signal strength of the AP 3 and the AP 4 is stronger. The radio frequency module A of the CPE 602 accesses the AP 3, and the radio frequency module B accesses the AP 4. In other words, the CPE 602 separately establishes a connection to the AP 3 and the AP 4. The AP 3 corresponds to a connection channel of a 2.4 GHz operating frequency band, and the AP 4 corresponds to a connection channel of a 5 GHz operating frequency band. The CPE 602 sends two same packets 1 of the received packet 1 of the terminal 601 through the two channels of the 2.4 GHz frequency band and the 5 GHz frequency band respectively. After receiving the two packets 1 from the AP 3 and the AP 4 successively, the WAC 603 selects a packet 1 that arrives earlier, sends the packet 1 to the application server 604, and deletes the other duplicate packet 1 that arrives later.

Then, the CPE 602 still continuously monitors radio frequency statuses of the connections of the radio frequency module A and the radio frequency module B that are associated, for subsequent roaming.

It should be noted that the embodiment shown in FIG. 6A to FIG. 6D is merely intended to describe the technical solutions of this application more clearly, and does not constitute a limitation on this application. In another embodiment, more or fewer terminal devices and network devices may be included, and more or fewer communication connections may be included. This is not limited herein. A person of ordinary skill in the art may learn that, with evolution of a network architecture and emergence of a new service scenario, the technical solutions provided in this application are also applicable to resolving similar technical problems.

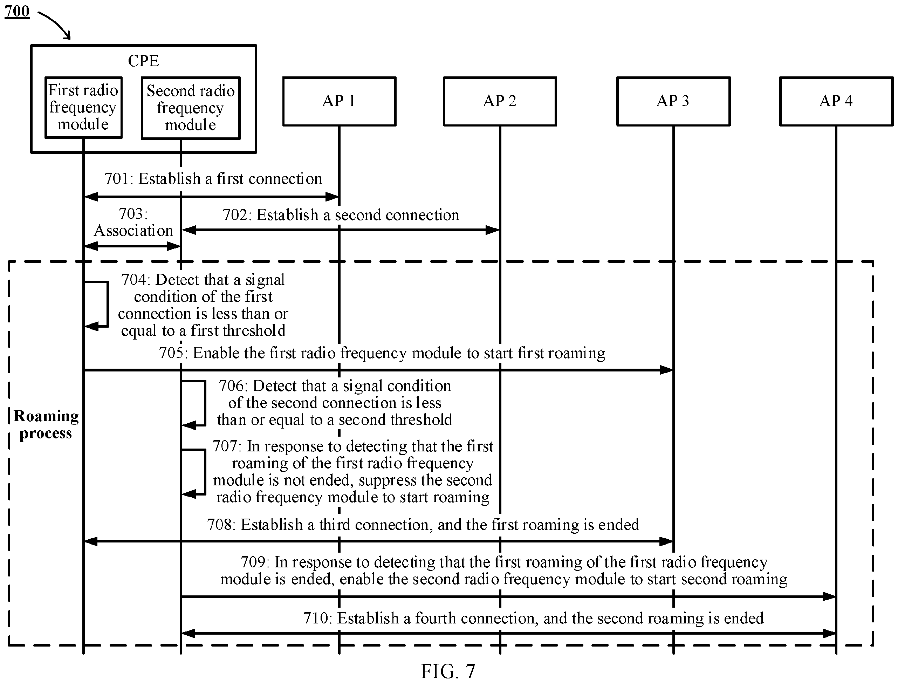

The following describes a service processing procedure 700 in a roaming process according to an embodiment of this application. FIG. 7 is a schematic diagram of the service processing procedure 700.

FIG. 7 shows the service processing procedure 700 in a CPE roaming process based on a dual fed and selective receiving mode. In this embodiment, based on a WLAN dual fed and selective receiving mode, a CPE (that is, the terminal device 100) uniformly and cooperatively controls roaming processes of two radio frequencies, to ensure that there is always a reliable wireless connection available for service packet processing in the roaming processes. According to this embodiment, in the WLAN dual fed and selective receiving roaming scenario, packet transmission reliability of a terminal can be improved, and a loss that may be caused by a lost transmitted packet can be avoided.

As described above, to extend mobility and flexibility of a STA, a CPE (for example, the CPE 503 on the mobile vehicle 501 in the foregoing embodiment, or the CPE 602 on the terminal 601) may be mounted on the STA. The CPE may convert a wired network signal, a cellular network signal, a wireless network signal, or the like input by the STA into a wireless network signal, and the CPE is wirelessly connected to an AP to implement network access communication. In this way, the STA may be free from a constraint of a fixed network cable and is not restricted by an insufficient quantity of reserved network interfaces. In addition, an activity range may be extended, and communication may be implemented in a place covered by the AP. When the CPE moves, a signal condition of a connection between the CPE and an original AP deteriorates due to a near-to-far change of a moving distance. When the signal condition is lower than a specified threshold, a roaming process is triggered to disconnect the CPE from the original AP and then connect the CPE to an AP with better signal quality.

In this embodiment, the CPE may support simultaneous operating of two frequency bands, and is configured to receive and send a radio signal. To be specific, the CPE may simultaneously support establishment of two wireless connections that operate on two frequency bands, 2.4 GHz and 5 GHz, respectively. For example, in some embodiments, the CPE may include two complete baseband processing modules and two radio frequency front-ends. Because the CPE has two independent paths, the paths may operate independently by using a 2.4 GHz connection and a 5 GHz connection. Two implementation methods are further included to implement the two complete paths. One implementation method is to use two integrated circuits to support the two paths respectively. The other implementation method is to use a single integrated circuit. Two independent paths may be integrated on the single integrated circuit. A device may schedule the single integrated circuit by using an upper-layer program, so that the single integrated circuit operates in two frequency bands.

In this embodiment, the CPE includes a first radio frequency module and a second radio frequency module (for example, the radio frequency module A and the radio frequency module B in the foregoing embodiment), which are for communication in different frequency bands. For example, the first radio frequency module may be for communication on the 2.4 GHz frequency band or the 5 GHz frequency band, and the second radio frequency module may be for communication on the 5 GHz frequency band or the 2.4 GHz frequency band. Operating frequency bands of the first radio frequency module and the second radio frequency module may be the same or may be different. This is not limited in this embodiment.

In this embodiment, reliability of data transmission in a wireless network is improved by using the dual fed and selective receiving mode. The CPE may replicate a received packet to obtain a same packet, add a same numerical label to the two same packets, and then send the two same packets through the first radio frequency module and the second radio frequency module respectively, that is, send the same packets through two channels of the 2.4 GHz frequency band and the 5 GHz frequency band respectively. The two packets arrive at a next transceiver node (for example, a WAC) successively, and the next transceiver node selects a packet that arrives earlier for subsequent transmission, and deletes a duplicate packet that arrives later, to ensure reliability of data transmission in the wireless network. The CPE may associate the first radio frequency module with the second radio frequency module, and monitor and compare radio frequency signal conditions.

The service processing procedure 700 in the CPE roaming process may include the following procedures, and an implementation sequence of the following procedures is not limited in this embodiment.

701: The CPE establishes a first connection to an AP 1 through the first radio frequency module.

702: The CPE establishes a second connection to the AP 2 through the second radio frequency module.

Anti-interference capabilities and penetration capabilities of radio frequency bands are different. In addition, interference sources of the radio frequency bands in a wireless environment are different. Therefore, signal strength of different channels is different.

703: The CPE associates the first radio frequency module with the second radio frequency module.

The CPE may continuously monitor signal conditions of the first connection and the second connection. Because both the first connection and the second connection are for transmitting a same packet, the first radio frequency module and the second radio frequency module that are for dual fed and selective receiving are associated in terms of resources, and are for comparing the signal conditions of the first connection and the second connection, to determine whether to start roaming and a roaming start sequence, thereby ensuring that roaming of one of the two radio frequency modules is suppressed in a timely manner while the other radio frequency module is in a roaming process.

In this embodiment, the signal condition may be represented by using a customized parameter for measuring a channel condition, and includes but is not limited to being defined by using one parameter or a combination of a plurality of (weighted) parameters such as signal strength, a CQI, an SINR, channel busyness, channel load, a bit error rate, and a packet loss rate. For example, in an example, signal strength may be used as a parameter for measuring a signal condition. Larger signal strength indicates a better signal condition, and smaller signal strength indicates a poorer signal condition.

Usually, a terminal senses a signal in passive or active mode: passively listening to a beacon frame and actively sending a probe frame for detection. During roaming, the terminal also uses the two modes to sense a signal. Different types of terminals use different modes, but a purpose is to better sense environment information to provide a decision basis for roaming behavior.

704: The CPE detects that a signal condition of the first connection is less than or equal to a first threshold.

The first threshold may be a threshold for triggering the first radio frequency module to initiate roaming. When it is detected that the signal condition of the first connection is less than or equal to the first threshold, the first radio frequency module is triggered to initiate a roaming request. The first threshold may be, for example, the threshold A in the foregoing embodiment.

A roaming process is usually initiated and driven by a terminal device. A rule affecting whether the terminal device roams may be determined by a wireless network adapter manufacturer, and is usually defined by an RSSI threshold. Different wireless network adapter manufacturers set different roaming thresholds of terminal devices. The RSSI threshold usually includes but is not limited to one or more (weighted) parameters such as signal strength, signal quality, a noise level, a bit error rate, a packet loss rate, a quantity of missed beacon frames, and the like, and a value of the RSSI threshold represents quality of a communication link.

In some embodiments, roaming may include active roaming and passive roaming. The active roaming means that a device actively initiates roaming when a signal condition is lower than a threshold, to search for an AP with a better signal condition. The passive roaming means that a threshold may be set on an AP; and when the AP detects that a signal condition of a connection is lower than the threshold, the AP forces the device to go offline, and then the device passively searches for an AP with a better signal condition. This embodiment is mainly applied to a case of active roaming, or a case of active roaming combined with passive roaming. In a case of passive roaming, if an AP disconnects both radio frequency connections of the device, the device does not need to suppress or allow a roaming request. Instead, the device immediately searches for an accessible AP with stronger signal strength.

In some embodiments, the first radio frequency module reaches a roaming triggering threshold earlier than the second radio frequency module, in other words, it is detected that the signal condition of the first connection is less than or equal to the first threshold. For example, in a moving process of the CPE, a distance between the CPE and the AP 1 is greater than a distance between the CPE and the AP 2. Therefore, in the moving process, the signal conditions of both the first connection and the second connection become poorer, but the signal condition of the first connection is poorer than the signal condition of the second connection, and the signal condition of the first connection first becomes poorer to the first threshold for triggering roaming.

705: The CPE enables the first radio frequency module to start first roaming.

The CPE detects that a signal condition of the AP 3 is better, and therefore starts the first roaming, so that the first radio frequency module establishes a third connection to the AP 3. The first roaming refers to a roaming process in which the first radio frequency module roams from the AP 1 to the AP 3. The AP 3 and the AP 1 have same settings such as an SSID, a password, an encryption manner, and an operating frequency band, so that an upper-layer application connection is not interrupted in a process of roaming and switching between APs, and an attribute and a permission of the connection remain unchanged. For a specific description of roaming, refer to the foregoing description. Details are not described herein again.

706: The CPE detects that the signal condition of the second connection is less than or equal to a second threshold.

The second threshold may be a threshold for triggering the second radio frequency module to initiate roaming. Values of the first threshold and the second threshold may be the same, or may be different. This is not limited in this embodiment. The second threshold may be, for example, the threshold B in the foregoing embodiment.

For example, as the CPE moves farther in this moving process, a distance between the CPE and the AP 2 gradually increases, and the signal condition of the second connection also deteriorates to the second threshold for triggering roaming of the second radio frequency module.

When the signal condition of the second connection is less than or equal to the second threshold, the CPE detects that the second radio frequency module initiates a roaming request.

707: In response to detecting that the first roaming of the first radio frequency module is not ended, the CPE suppresses the second radio frequency module to start roaming.

When a radio frequency module is in a roaming process, the CPE suppresses a roaming process of the other radio frequency module. This ensures that there is always a channel available for service processing and ensures timely packet transmission.

708: The CPE establishes the third connection to the AP 3 through the first radio frequency module, and the first roaming of the first radio frequency module is ended.

709: In response to detecting that the first roaming of the first radio frequency module is ended, enable the second radio frequency module to start second roaming.

The CPE detects that a signal condition of the AP 4 is better, and therefore starts the second roaming, so that the second radio frequency module establishes a fourth connection to the AP 4. The second roaming refers to a roaming process in which the second radio frequency module roams from the AP 2 to the AP 4. The AP 4 and the AP 2 have same settings such as an SSID, a password, an encryption manner, and an operating frequency band, so that an upper-layer application connection is not interrupted in a process of roaming and switching between APs, and an attribute and a permission of the connection remain unchanged.

710: The CPE establishes the fourth connection to the AP 4 through the second radio frequency module, and the second roaming of the second radio frequency module is ended.

The second roaming is ended, and the second radio frequency module accesses the AP 4.

In this embodiment, when the first radio frequency module is in a process of the first roaming, the second radio frequency module may initiate roaming, or roaming may not be triggered because the second threshold is not reached. If the second radio frequency module initiates roaming when the first radio frequency module is in the process of the first roaming, roaming of the second radio frequency module is suppressed until the first roaming of the first radio frequency module is ended. If the second radio frequency module initiates roaming only after the first roaming of the first radio frequency module is ended, the second roaming of the second radio frequency module may be directly started.

In this embodiment, no matter whether the thresholds for initiating roaming by the two radio frequency modules are the same, or no matter which signal condition of the two radio frequency connections is actually better, provided that one of the two radio frequency modules first initiates a roaming request, it is considered that a signal condition of the radio frequency connection that first initiates the roaming request is poorer because the radio frequency connection first reaches a roaming threshold. The CPE enables the radio frequency module that first sends the roaming request to start roaming and then suppresses roaming of the other radio frequency module. After the roaming of the radio frequency module that first sends the roaming request is ended, the CPE starts roaming of the other radio frequency module.

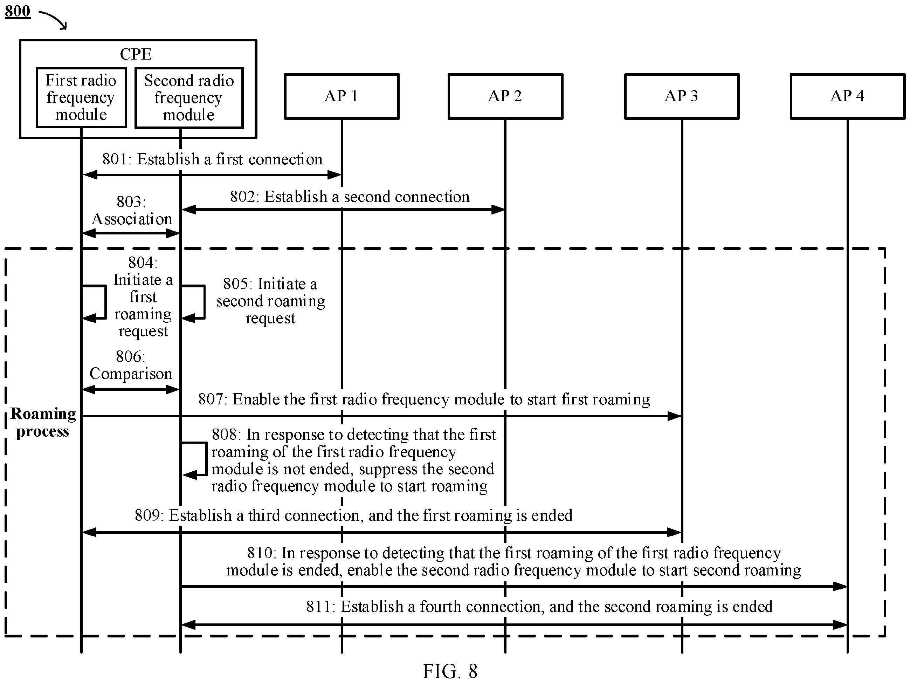

The following describes a service processing procedure 800 in a roaming process according to another embodiment of this application. FIG. 8 is a schematic diagram of the service processing procedure 800.

This embodiment shows another case different from the embodiment corresponding to the service processing procedure 700.

In some embodiments, if the first radio frequency module and the second radio frequency module initiate a roaming application at a same moment, the CPE may compare the signal conditions of the first connection and the second connection, and select a radio frequency module with a poorer signal condition to start roaming, to suppress roaming of the other radio frequency module.

In some other embodiments, the first threshold is different from the second threshold, which may result in that a signal condition of a radio frequency connection that first reaches the roaming threshold is better than that of a radio frequency connection that later reaches the roaming threshold. In an example, the first threshold is -80 dBm, the second threshold is -60 dBm, and the second threshold is higher than the first threshold. When signal strength of the second connection reaches -60 dBm and roaming is triggered, signal strength of the first connection is -70 dBm and roaming is not triggered, but the signal strength of the second connection is stronger than the signal strength of the first connection. In some embodiments, when one of the radio frequency modules reaches a threshold and initiates a roaming application, the CPE may first compare the signal conditions of the first radio frequency module and the second radio frequency module, and select a radio frequency module with a poorer signal condition to actively initiate roaming, to suppress roaming of the other radio frequency module. For example, in this example, the signal strength of the second connection reaches -60 dBm and a roaming application is triggered, the signal strength of the first connection is -70 dBm but roaming is not triggered yet. After the signal conditions of the two radio frequency connections are compared, if it is found that the signal strength of the second connection is stronger than the signal strength of the first connection, the first radio frequency module may be selected to start roaming, to suppress roaming of the second radio frequency module. After roaming of the first radio frequency module is ended, roaming of the second radio frequency module is started.

FIG. 8 shows the service processing procedure 800 in a CPE roaming process based on a dual fed and selective receiving mode. In this embodiment, based on a WLAN dual fed and selective receiving mode, a CPE uniformly and cooperatively controls roaming processes of two radio frequencies, to ensure that there is always a reliable wireless connection available for service packet processing in the roaming processes. According to this embodiment, in the WLAN dual fed and selective receiving roaming scenario, packet transmission reliability of a terminal can be improved, and a loss that may be caused by a lost transmitted packet can be avoided.

As described above, to extend mobility and flexibility of a STA, a CPE (for example, the CPE 503 on the mobile vehicle 501 in the foregoing embodiment, or the CPE 602 on the terminal 601) may be mounted on the STA. The CPE may convert a wired network signal, a cellular network signal, a wireless network signal, or the like input by the STA into a wireless network signal, and the CPE is wirelessly connected to an AP to implement network access communication. In this way, the STA may be free from a constraint of a fixed network cable and is not restricted by an insufficient quantity of reserved network interfaces. In addition, an activity range may be extended, and communication may be implemented in a place covered by the AP. When the CPE moves, a signal condition of a connection between the CPE and an original AP deteriorates due to a near-to-far change of a moving distance. When the signal condition is lower than a specified threshold, a roaming process is triggered to disconnect the CPE from the original AP and then connect the CPE to an AP with better signal quality.

In this embodiment, the CPE may support simultaneous operating of two frequency bands, and is configured to receive and send a radio signal. To be specific, the CPE may simultaneously support establishment of two wireless connections that operate on two frequency bands, 2.4 GHz and 5 GHz, respectively. For example, in some embodiments, the CPE may include two complete baseband processing modules and two radio frequency front-ends. Because the CPE has two independent paths, the paths may operate independently by using a 2.4 GHz connection and a 5 GHz connection. Two implementation methods are further included to implement the two complete paths. One implementation method is to use two integrated circuits to support the two paths respectively. The other implementation method is to use a single integrated circuit. Two independent paths may be integrated on the single integrated circuit. A device may schedule the single integrated circuit by using an upper-layer program, so that the single integrated circuit operates in two frequency bands.

In this embodiment, the CPE includes a first radio frequency module and a second radio frequency module, which are for communication on different frequency bands. For example, the first radio frequency module may be for communication on the 2.4 GHz frequency band or the 5 GHz frequency band, and the second radio frequency module may be for communication on the 5 GHz frequency band or the 2.4 GHz frequency band. Operating frequency bands of the first radio frequency module and the second radio frequency module may be the same or may be different. This is not limited in this embodiment.

In this embodiment, reliability of data transmission in a wireless network is improved by using the dual fed and selective receiving mode. The CPE may replicate a received packet to obtain a same packet, add a same numerical label to the two same packets, and then send the two same packets through the first radio frequency module and the second radio frequency module respectively, that is, send the same packets through two channels of the 2.4 GHz frequency band and the 5 GHz frequency band respectively. The two packets arrive at a next transceiver node (for example, a WAC) successively, and the next transceiver node selects a packet that arrives earlier for subsequent transmission, and deletes a duplicate packet that arrives later, to ensure reliability of data transmission in the wireless network. The CPE may associate the first radio frequency module with the second radio frequency module, and monitor and compare radio frequency signal conditions.

The service processing procedure 800 in the CPE roaming process may include the following procedures, and an implementation sequence of the following procedures is not limited in this embodiment.

801: The CPE establishes a first connection to an AP 1 through the first radio frequency module.

802: The CPE establishes a second connection to the AP 2 through the second radio frequency module.

Anti-interference capabilities and penetration capabilities of radio frequency bands are different. In addition, interference sources of the radio frequency bands in a wireless environment are different. Therefore, signal strength of different channels is different.

803: The CPE associates the first radio frequency module with the second radio frequency module.

The CPE may continuously monitor signal conditions of the first connection and the second connection. Because both the first connection and the second connection are for transmitting a same packet, the first radio frequency module and the second radio frequency module that are for dual fed and selective receiving are associated in terms of resources, and are for comparing the signal conditions of the first connection and the second connection, to determine whether to start roaming and a roaming start sequence, thereby ensuring that roaming of one of the two radio frequency modules is suppressed in a timely manner while the other radio frequency module is in a roaming process.

In this embodiment, the signal condition may be represented by using a customized parameter for measuring a channel condition, and includes but is not limited to being defined by using one parameter or a combination of a plurality of (weighted) parameters such as signal strength, a CQI, an SINR, channel busyness, channel load, a bit error rate, and a packet loss rate. For example, in an example, signal strength may be used as a parameter for measuring a signal condition. Larger signal strength indicates a better signal condition, and smaller signal strength indicates a poorer signal condition.

Usually, a terminal senses a signal in passive or active mode: passively listening to a beacon frame and actively sending a probe frame for detection. During roaming, the terminal also uses the two modes to sense a signal. Different types of terminals use different modes, but a purpose is to better sense environment information to provide a decision basis for roaming behavior.

Optionally, in step 804, the CPE detects that the first radio frequency module initiates a first roaming request.

The first threshold may be a threshold for triggering the first radio frequency module to initiate roaming. When it is detected that the signal condition of the first connection is less than or equal to the first threshold, the first radio frequency module is triggered to initiate the first roaming request. The first roaming is roaming of the first radio frequency module from the AP 1 to an AP 3, where at a moment when the first roaming request is initiated, a signal condition of the AP 3 is better than a signal condition of the AP 1. The first threshold may be, for example, the threshold A in the foregoing embodiment.

Alternatively, optionally, in step 805, the CPE detects that the second radio frequency module initiates a second roaming request.

The second threshold may be a threshold for triggering the second radio frequency module to initiate roaming. The second threshold may be, for example, the threshold B in the foregoing embodiment. Values of the first threshold and the second threshold may be the same, or may be different. This is not limited in this embodiment. When it is detected that the signal condition of the second connection is less than or equal to the second threshold, the second radio frequency module is triggered to initiate the second roaming request. The second roaming is roaming of the second radio frequency module from the AP 2 to an AP 4, where at a moment when the second roaming request is initiated, a signal condition of the AP 4 is better than a signal condition of the AP 2.

A roaming process is usually initiated and driven by a terminal device. A rule affecting whether the terminal device roams may be determined by a wireless network adapter manufacturer, and is usually defined by an RSSI threshold. Different wireless network adapter manufacturers set different roaming thresholds of terminal devices. The RSSI threshold usually includes but is not limited to one or more (weighted) parameters such as signal strength, signal quality, a noise level, a bit error rate, a packet loss rate, a quantity of missed beacon frames, and the like, and a value of the RSSI threshold represents quality of a communication link.

806: The CPE compares the signal condition of the first connection with the signal condition of the second connection, and the CPE detects that the signal condition of the first connection is poorer than the signal condition of the second connection.

Optionally, when the CPE detects that the first radio frequency module or the second radio frequency module initiates a roaming request, the CPE compares the signal conditions of the first connection and the second connection, selects a radio frequency module with a poorer signal condition, enables the radio frequency module to start roaming, and suppresses roaming of the other radio frequency module with a better signal condition, instead of directly allowing a radio frequency module that first initiates a roaming application to start roaming. That is, the CPE starts roaming based on a signal condition of a radio frequency connection.

Optionally, the CPE monitors and compares the signal condition of the first connection with the signal condition of the second connection constantly or at intervals. When detecting that the signal condition of the first connection is poorer than the signal condition of the second connection, and the signal condition of the first connection is lower than a third threshold, the CPE initiates roaming. The third threshold may be the first threshold or the second threshold, or may not be the first threshold or the second threshold. In other words, the CPE initiates roaming based on a detected signal condition lower than the third threshold, instead of being triggered based on the roaming request of the first radio frequency module or the second radio frequency module. For example, the third threshold may be greater than the first threshold, and has not reached the threshold for the first radio frequency module to initiate roaming, the CPE enables the first radio frequency module to start roaming. In some embodiments, the third threshold may be, for example, the threshold A in the foregoing embodiment.

The signal condition is indicated by one or more of the following parameters: signal strength, a channel quality indicator CQI, a signal to interference plus noise ratio SINR, channel busyness, channel load, a packet retransmission rate, a bit error rate, a packet loss rate, a channel delay, a transmit opportunity TXOP, a quantity of missed beacon frames, or the like.

807: The CPE enables the first radio frequency module to start first roaming.

The CPE detects that a signal condition of the AP 3 is better, and therefore starts the first roaming, so that the first radio frequency module establishes a third connection to the AP 3. The first roaming refers to a roaming process in which the first radio frequency module roams from the AP 1 to the AP 3. The AP 3 and the AP 1 have same settings such as an SSID, a password, an encryption manner, and an operating frequency band, so that an upper-layer application connection is not interrupted in a process of roaming and switching between APs, and an attribute and a permission of the connection remain unchanged. For a specific description of roaming, refer to the foregoing description. Details are not described herein again.

808: In response to detecting that the first roaming of the first radio frequency module is not ended, the CPE suppresses the second radio frequency module to start roaming.

When a radio frequency module is in a roaming process, the CPE suppresses a roaming process of the other radio frequency module. This ensures that there is always a channel available for service processing and ensures timely packet transmission.

In some embodiments, in the foregoing procedure 805, the CPE has detected the second roaming request initiated by the second radio frequency module. However, the CPE does not start the second roaming but suppresses the second radio frequency module to start the second roaming, until the first radio frequency module ends the first roaming.

In some other embodiments, in a process in which the first radio frequency module is in the first roaming, the CPE learns that the second radio frequency module initiates the second roaming request because the second threshold is reached, and the CPE suppresses starting of the second roaming until the first radio frequency module ends the first roaming.

809: The CPE establishes the third connection to the AP 3 through the first radio frequency module, and the first roaming of the first radio frequency module is ended.

810: In response to detecting that the first roaming of the first radio frequency module is ended, enable the second radio frequency module to start second roaming.

The CPE detects that a signal condition of the AP 4 is better, and therefore starts the second roaming, so that the second radio frequency module establishes a fourth connection to the AP 4. The second roaming refers to a roaming process in which the second radio frequency module roams from the AP 2 to the AP 4. The AP 4 and the AP 2 have same settings such as an SSID, a password, an encryption manner, and an operating frequency band, so that an upper-layer application connection is not interrupted in a process of roaming and switching between APs, and an attribute and a permission of the connection remain unchanged.

811: The CPE establishes a fourth connection to the AP 4 through the second radio frequency module, and the second roaming of the second radio frequency module is ended.

The second roaming is ended, and the second radio frequency module accesses the AP 4.

In this embodiment, when the first radio frequency module is in a process of the first roaming, the second radio frequency module may initiate roaming, or roaming may not be triggered because the second threshold is not reached. If the second radio frequency module initiates roaming when the first radio frequency module is in the process of the first roaming, roaming of the second radio frequency module is suppressed until the first roaming of the first radio frequency module is ended. If the second radio frequency module initiates roaming only after the first roaming of the first radio frequency module is ended, the second roaming of the second radio frequency module may be directly started.

In this embodiment, based on comparison of the signal conditions of the two radio frequency connections, the CPE determines to select a radio frequency module with a poorer signal condition to enable the radio frequency module to first start roaming, and then suppresses the other radio frequency module to start roaming. No matter whether thresholds for initiating roaming by the two radio frequency modules are the same, and no matter which radio frequency connection initiates a roaming request first, roaming may be preferentially started provided that a signal condition is poorer. After the roaming of the radio frequency module with poorer signal quality is ended, roaming of the other radio frequency module is started.

With reference to the foregoing embodiments, the following describes a roaming method provided in an embodiment of this application.

In this embodiment, based on a WLAN dual fed and selective receiving mode, the terminal device 100 may uniformly and cooperatively control roaming processes of two radio frequencies, to ensure that there is always a reliable wireless connection available for service packet processing in the roaming processes. According to this embodiment, in the WLAN dual fed and selective receiving roaming scenario, packet transmission reliability of a terminal can be improved, and a loss that may be caused by a lost transmitted packet can be avoided.

The terminal device 100 may also be referred to as a first device, and may be implemented as the CPE in the foregoing embodiments. The terminal device 100 may be wirelessly connected to the AP, to implement network access communication. When the terminal device 100 moves, a signal condition of a connection between the terminal device and an original AP deteriorates due to a near-to-far change of a moving distance. When the signal condition is lower than a specified threshold, a roaming process is triggered to disconnect the terminal device from the original AP and then connect the terminal device to an AP with better signal quality.

In this embodiment, the terminal device 100 may support simultaneous operating of two frequency bands, and is configured to receive and send a radio signal. To be specific, the terminal device may simultaneously support establishment of two wireless connections that operate on two frequency bands, 2.4 GHz and 5 GHz, respectively.

In this embodiment, the terminal device 100 includes a first radio frequency module and a second radio frequency module, which are for communication on different frequency bands. For example, the first radio frequency module may be for communication on the 2.4 GHz frequency band or the 5 GHz frequency band, and the second radio frequency module may be for communication on the 5 GHz frequency band or the 2.4 GHz frequency band. Operating frequency bands of the first radio frequency module and the second radio frequency module may be the same or may be different. This is not limited in this embodiment.

In this embodiment, reliability of data transmission in a wireless network is improved by using the dual fed and selective receiving mode. The terminal device 100 may replicate a received packet to obtain a same packet, add a same numerical label to the two same packets, and then send the two same packets through the first radio frequency module and the second radio frequency module respectively, that is, send the same packets through two channels of the 2.4 GHz frequency band and the 5 GHz frequency band respectively. The two packets arrive at a second device (for example, a wireless local area network access controller WAC) through the AP successively, and the second device selects a packet that arrives earlier for subsequent transmission, and deletes a duplicate packet that arrives later, to ensure reliability of data transmission in the wireless network. The terminal device 100 may associate the first radio frequency module with the second radio frequency module, and monitor and compare radio frequency signal conditions. The second device is configured to manage a plurality of APs, including a first AP, a second AP, a third AP, and/or a fourth AP. In some embodiments, the second device may receive the packet that is sent through the first radio frequency module and that is received by the first AP, the packet that is sent through the second radio frequency module and that is received by the second AP, the packet that is sent through the first radio frequency module and that is received by the third AP, and the packet that is sent through the second radio frequency module and that is received by the fourth AP.

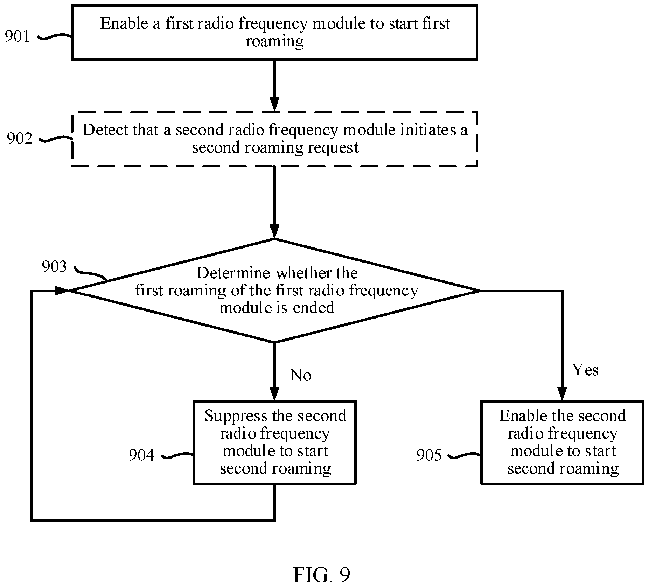

Refer to a flowchart of a roaming method shown in FIG. 9. The roaming method may include the following procedures, and an implementation sequence of the following procedures is not limited in this embodiment.

Block 901: A terminal device 100 enables a first radio frequency module to start first roaming.

The terminal device 100 includes a first radio frequency module and a second radio frequency module. Before starting the first roaming, the terminal device 100 establishes a first connection to an AP 1 through the first radio frequency module, and establishes a second connection to an AP 2 through the second radio frequency module. At a moment at which the first roaming is initiated, it may be detected that a signal condition of an AP 3 is better than that of the AP 1. After the first roaming is ended, the terminal device 100 establishes a third connection to the AP 3 through the first radio frequency module. The first roaming refers to a roaming process in which the first radio frequency module roams from the AP 1 to the AP 3. At a moment at which second roaming is initiated, it may be detected that a signal condition of an AP 4 is better than that of the AP 2. After the second roaming is ended, the terminal device 100 establishes a fourth connection to the AP 4 through the second radio frequency module. The second roaming refers to a roaming process in which the second radio frequency module roams from the AP 2 to the AP 4. The AP 3 and the AP 1 have same settings, and the AP 4 and the AP 2 have same settings, such as an SSID, a password, an encryption manner, and an operating frequency band, so that an upper-layer application connection is not interrupted in a process of roaming and switching between APs, and an attribute and a permission of the connection remain unchanged. For a specific description of roaming, refer to the foregoing description. Details are not described herein again.

The terminal device 100 may continuously monitor signal conditions of the first connection and the second connection. Because both the first connection and the second connection are for transmitting a same packet, the first radio frequency module and the second radio frequency module that are for dual fed and selective receiving are associated in terms of resources, and are for comparing the signal conditions of the first connection and the second connection, to determine whether to start roaming and a roaming start sequence, thereby ensuring that roaming of one of the two radio frequency modules is suppressed in a timely manner while the other radio frequency module is in a roaming process.

In this embodiment, the signal condition may be represented by using a customized parameter for measuring a channel condition, and includes but is not limited to being defined or indicated by using one parameter or a combination of a plurality of (weighted) parameters such as signal strength, a CQI, an SINR, channel busyness, channel load, a packet retransmission rate, a bit error rate, a packet loss rate, a channel delay, a transmit opportunity TXOP, and a quantity of missed beacon frames. For example, in an example, signal strength may be used as a parameter for measuring a signal condition. Larger signal strength indicates a better signal condition, and smaller signal strength indicates a poorer signal condition.

In embodiments of this application, the signal condition may refer to signal quality represented by a signal indicator. The signal indicator includes a signal optimization degree indicator or a signal degradation degree indicator. The signal optimization degree indicator includes one or more of the following: signal strength, a channel quality indicator CQI, a signal to interference plus noise ratio SINR, a transmit opportunity TXOP, or the like, and the signal degradation degree indicator includes one or more of the following: channel busyness, channel load, a packet retransmission rate, a bit error rate, a packet loss rate, a channel delay, a quantity of missed beacon frames, or the like. A larger value of the signal optimization degree indicator indicates better signal quality, and a smaller value of the signal degradation degree indicator indicates better signal quality.

Usually, a terminal senses a signal in passive or active mode: passively listening to a beacon frame and actively sending a probe frame for detection. During roaming, the terminal also uses the two modes to sense a signal. Different types of terminals use different modes, but a purpose is to better sense environment information to provide a decision basis for roaming behavior.

A roaming process is usually initiated and driven by a terminal device. A rule affecting whether the terminal device roams may be determined by a wireless network adapter manufacturer, and is usually defined by an RSSI threshold. Different wireless network adapter manufacturers set different roaming thresholds of terminal devices. The RSSI threshold usually includes but is not limited to one or more (weighted) parameters such as signal strength, signal quality, a noise level, a bit error rate, a packet loss rate, a quantity of missed beacon frames, and the like, and a value of the RSSI threshold represents quality of a communication link.

A mechanism for triggering the terminal device 100 to enable the first radio frequency module to start the first roaming may include the following several cases.

In a first case, in response to the first radio frequency module initiating a first roaming request, the terminal device 100 enables the first radio frequency module to start the first roaming. That is, no matter whether the thresholds for initiating roaming by the two radio frequency modules are the same, or no matter which signal condition of the two radio frequency connections is actually better, provided that one of the two radio frequency modules first initiates a roaming request, it is considered that a signal condition of the radio frequency connection that first initiates the roaming request is poorer because the radio frequency connection first reaches a roaming threshold. The terminal device 100 enables the radio frequency module that first sends the roaming request to start roaming and then suppresses roaming of the other radio frequency module. After the roaming of the radio frequency module that first sends the roaming request is ended, the terminal device starts roaming of the other radio frequency module.

For example, the first radio frequency module reaches a roaming triggering threshold earlier than the second radio frequency module, in other words, it is detected that a value of a signal indicator of the first connection first reaches the first threshold. To be specific, signal quality represented by a signal indicator of the first radio frequency module is poorer than or equal to signal quality represented by a first threshold. If the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold. For example, in a moving process of the terminal device 100, a distance between the terminal device and the AP 1 is greater than a distance between the terminal device and the AP 2. Therefore, in the moving process, the signal conditions of both the first connection and the second connection become poorer, but the signal condition of the first connection is poorer than the signal condition of the second connection, and the signal condition of the first connection first becomes poorer to the first threshold for triggering roaming initiation.

In a second case, optionally, the terminal device 100 detects that the first radio frequency module initiates a first roaming request, or the terminal device 100 detects that the second radio frequency module initiates a second roaming request, and then determines which signal condition of the first radio frequency module and the second radio frequency module is poorer. The terminal device 100 enables, based on a detected signal condition of the first radio frequency module that is poorer than a signal condition of the second radio frequency module, the first radio frequency module to start the first roaming. That is, in some embodiments, if the first radio frequency module and the second radio frequency module initiate the roaming requests at a same moment, or the first radio frequency module first initiates the first roaming request and/or the second radio frequency module first initiates the second roaming request at different moments, the terminal device 100 may compare signal conditions of the first connection and the second connection, and select a radio frequency module with a poorer signal condition to start roaming, to suppress roaming of the other radio frequency module. In an example, the terminal device 100 compares the signal condition of the first connection with the signal condition of the second connection, detects that the signal condition of the first connection is poorer than the signal condition of the second connection, and then enables the first radio frequency module to start the first roaming.

That is, in some embodiments, when the terminal device 100 detects that the first radio frequency module or the second radio frequency module initiates the roaming requests, the terminal device 100 compares the signal conditions of the first connection and the second connection, selects a radio frequency module with a poorer signal condition, enables the radio frequency module to start roaming, and suppresses roaming of the other radio frequency module with a better signal condition, instead of directly allowing a radio frequency module that first initiates the roaming application to start roaming. That is, the terminal device 100 starts roaming based on a signal condition of a radio frequency connection.

The first threshold may be a threshold for triggering the first radio frequency module to initiate roaming. The first threshold may be, for example, the threshold A in the foregoing embodiment. In response to detecting that a value of a signal indicator of the first radio frequency module reaches the first threshold, the first radio frequency module initiates the first roaming request. To be specific, signal quality represented by a signal indicator of the first radio frequency module is poorer than or equal to signal quality represented by a first threshold. If the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold. The first roaming is roaming of the first radio frequency module from the AP 1 to an AP 3, where at a moment when the first roaming request is initiated, a signal condition of the AP 3 is better than a signal condition of the AP 1.

The second threshold may be a threshold for triggering the second radio frequency module to initiate roaming. The second threshold may be, for example, the threshold B in the foregoing embodiment. Values of the first threshold and the second threshold may be the same, or may be different. This is not limited in this embodiment. In response to detecting that a value of a signal indicator of the second radio frequency module reaches the second threshold, the second radio frequency module initiates the second roaming request. To be specific, signal quality represented by the signal indicator of the second radio frequency module is poorer than or equal to signal quality represented by the second threshold. If the signal indicator of the second radio frequency module is the signal optimization degree indicator, the value of the signal indicator of the second radio frequency module is less than or equal to the second threshold; or if the signal indicator of the second radio frequency module is the signal degradation degree indicator, the value of the signal indicator of the second radio frequency module is greater than or equal to the second threshold. The second roaming is roaming of the second radio frequency module from the AP 2 to an AP 4, where at a moment when the second roaming request is initiated, a signal condition of the AP 4 is better than a signal condition of the AP 2.

For another example, in some embodiments, the first threshold is different from the second threshold, which may result in that a signal condition of a radio frequency connection that first reaches the roaming threshold is better than that of a radio frequency connection that later reaches the roaming threshold. In an example, the first threshold is -80 dBm, the second threshold is -60 dBm, and the second threshold is higher than the first threshold. When signal strength of the second connection reaches -60 dBm and roaming is triggered, signal strength of the first connection is -70 dBm and roaming is not triggered, but the signal strength of the second connection is stronger than the signal strength of the first connection. In some embodiments, when one of the radio frequency modules reaches a threshold and initiates a roaming application, the terminal device 100 may first compare the signal conditions of the first radio frequency module and the second radio frequency module, and select a radio frequency module with a poorer signal condition to actively initiate roaming, to suppress roaming of the other radio frequency module. For example, in this example, the signal strength of the second connection reaches -60 dBm and a roaming application is triggered, the signal strength of the first connection is -70 dBm but roaming is not triggered yet. After the signal conditions of the two radio frequency connections are compared, if it is found that the signal strength of the second connection is stronger than the signal strength of the first connection, the first radio frequency module may be selected to start roaming, to suppress roaming of the second radio frequency module. After roaming of the first radio frequency module is ended, roaming of the second radio frequency module is started.

In a third case, in response to detecting that a signal condition of the first radio frequency module is poorer than a signal condition of the second radio frequency module and that a value of a signal indicator of the first radio frequency module reaches a third threshold, the terminal device 100 enables the first radio frequency module to start the first roaming. The value of the signal indicator of the first radio frequency module reaches the third threshold means that signal quality represented by the signal indicator of the first radio frequency module is poorer than or equal to signal quality represented by the third threshold. If the signal indicator of the first radio frequency module is the signal optimization degree indicator, a value of the signal indicator of the first radio frequency module is less than or equal to the third threshold; or if the signal indicator of the first radio frequency module is the signal degradation degree indicator, a value of the signal indicator of the first radio frequency module is greater than or equal to the third threshold.

In an embodiment of this case, a value of the third threshold is not limited, the third threshold may be greater than, less than, or equal to the first threshold or the second threshold, and the third threshold may be set according to an actual situation. In some embodiments, the third threshold may be, for example, the threshold A in the foregoing embodiment.

In an embodiment of this case, based on comparison of the signal conditions of the two radio frequency connections, the terminal device 100 determines to select a radio frequency module with a poorer signal condition to enable the radio frequency module to first start the roaming, and then suppresses the other radio frequency module to start roaming. No matter whether thresholds for initiating roaming by the two radio frequency modules are the same, and no matter which radio frequency connection initiates a roaming request first, roaming may be preferentially started provided that a signal condition is poorer than the third threshold. After the roaming of the radio frequency module with poorer signal quality is ended, roaming of the other radio frequency module is started.

Optionally, the terminal device 100 may monitor and compare the signal condition of the first connection and the signal condition of the second connection constantly or at intervals. When detecting that the signal condition of the first connection is poorer than the signal condition of the second connection, and the signal condition of the first connection is lower than the third threshold, the terminal device 100 initiates roaming. The third threshold may be the first threshold or the second threshold, or may not be the first threshold or the second threshold. In other words, the terminal device 100 initiates roaming based on a detected signal condition lower than the third threshold, instead of being triggered based on the roaming request of the first radio frequency module or the second radio frequency module. For example, the third threshold may be greater than the first threshold, and has not reached the threshold for the first radio frequency module to initiate roaming, the terminal device 100 enables the first radio frequency module to start roaming.

Optionally, in block 902, the terminal device 100 detects that the second radio frequency module initiates the second roaming request.

In some embodiments, when the first radio frequency module is in a process of the first roaming, the second radio frequency module may initiate the second roaming request because the second threshold is reached, or roaming may not be triggered because the second threshold is not reached. If the second radio frequency module initiates roaming when the first radio frequency module is in the process of the first roaming, roaming of the second radio frequency module is suppressed until the first roaming of the first radio frequency module is ended. If the second radio frequency module initiates roaming only after the first roaming of the first radio frequency module is ended, the second roaming of the second radio frequency module may be directly started.

In some other embodiments, before the first roaming of the first radio frequency module is started, the terminal device 100 has detected the second roaming request initiated by the second radio frequency module. However, the terminal device 100 does not start the second roaming but suppresses the second radio frequency module to start the second roaming, and starts the second roaming until the first radio frequency module ends the first roaming.

Block 903: The terminal device 100 determines whether the first roaming of the first radio frequency module is ended; and if the first roaming is not ended, performs block 904; or if the first roaming is ended, performs block 905.

Block 904: The terminal device 100 suppresses the second radio frequency module to start the second roaming.

When a radio frequency module is in a roaming process, the terminal device 100 suppresses a roaming process of the other radio frequency module. This ensures that there is always a channel available for service processing and ensures timely packet transmission.

Then, the terminal device 100 continues to monitor whether the first roaming of the first radio frequency module is ended, and may enable the second radio frequency module to start the second roaming until detecting that the first roaming of the first radio frequency module is ended.

Block 905: The terminal device 100 enables the second radio frequency module to start the second roaming.

The terminal device 100 accesses the AP 4 through the second radio frequency module, and the second roaming is ended.

The foregoing embodiments are merely intended to describe the technical solutions of this application more clearly, and does not constitute a limitation on this application. Other embodiments may further include more or fewer procedures or steps, or embodiments are combined or split to obtain more implementations. This is not limited in this embodiment of this application.

The following describes function modules of a communication system 1000 provided in an embodiment of this application.

In this embodiment of this application, the communication system 1000 may be divided into function modules. For example, each function module may be obtained through division based on each function of the communication system 1000, or two or more functions of the communication system 1000 may be integrated into one function module. This is not limited in this embodiment. The integrated module may be implemented in a form of hardware, or may be implemented in a form of a software function module.

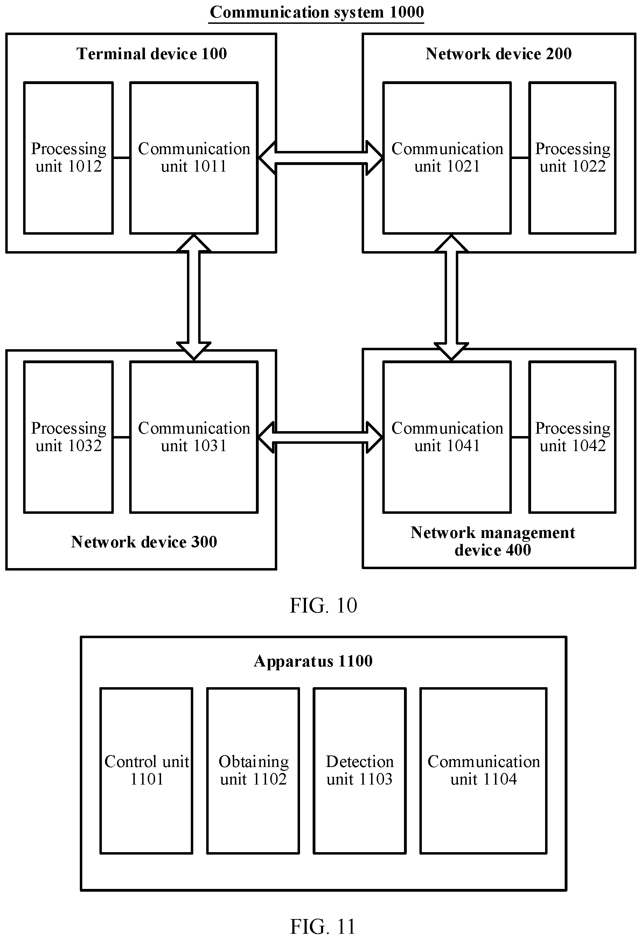

For example, FIG. 10 is a schematic diagram of function modules of the communication system 1000 according to an embodiment of this application. As shown in FIG. 10, the communication system 1000 may include a terminal device 100, a network device 200, a network device 300, and a network management device 400. In some embodiments, the terminal device 100 may be implemented as the CPE or the first device in the foregoing embodiments, the network device 200 and the network device 300 may be implemented as the APs in the foregoing embodiments, for example, the AP 1, the AP 2, the AP 3, and the AP 4, and the network management device 400 may be implemented as the WAC or the second device in the foregoing embodiments. The terminal device 100 may be configured to implement functions of the CPE described in the foregoing embodiments. The network device 200 and the network device 300 may be configured to implement functions of the AP described in the foregoing embodiments. The network management device 400 may be configured to implement functions of the WAC described in the foregoing embodiments. For brevity, details are not described herein again. Function modules in the communication system 1000, the terminal device 100, the network device 200, the network device 300, and the network management device 400 may be implemented by software, hardware, or a combination of software and hardware.

As shown in FIG. 10, the terminal device 100 may include a communication unit 1011 and a processing unit 1012.

The communication unit 1011 may be configured to: communicate with the network device 200, send a radio signal to the network device 200, and receive a packet of the network device 200. The communication unit 1011 may include a wired protocol stack and a wireless protocol stack, which are responsible for processing a wired and wireless packet and protocol respectively. The communication unit 1011 may be further configured to measure a signal condition of a channel, for example, signal strength. The communication unit 1011 may be further configured to determine a channel, an operating frequency band, and the like through negotiation.

The processing unit 1012 may be configured to control the communication unit 1011 to separately send a same packet to the network device 200 and the network device 300 through two radio frequency modules. The processing unit 1012 may be configured to control starting/suppressing of roaming of a radio frequency module. For example, when to start roaming is determined based on a signal condition of a radio frequency module. For example, when a radio frequency module is roaming, roaming of the other radio frequency module is suppressed. The processing unit 1012 may include a system on chip (system on chip, SOC), and is mainly configured to complete task scheduling and data forwarding control, including network control plane communication and forwarding plane communication, for example, data encapsulation and decapsulation, and traffic forwarding information query.

It may be understood that for specific implementation of the function units included in the terminal device 100, refer to the detailed descriptions in the foregoing embodiments. Details are not described herein again.

As shown in FIG. 10, the network device 200 may include a communication unit 1021 and a processing unit 1022.

The communication unit 1021 may be configured to: communicate with the terminal device 100, send a packet to the terminal device 100, and receive a packet from the terminal device 100. The communication unit 1021 may be configured to communicate with the network management device 400, and receive and send a message from and to the network management device 400. The communication unit 1021 may be further configured to measure a signal condition of each channel, for example, signal strength.

The processing unit 1022 may be configured to process, control, and schedule received and sent data, packets, or the like.

It may be understood that for specific implementation of the function units included in the network device 200, refer to the foregoing embodiments. Details are not described herein again.

As shown in FIG. 10, the network device 300 may include a communication unit 1031 and a processing unit 1032.

Similar to the network device 200, the communication unit 1031 may be configured to: communicate with the terminal device 100, send a packet to the terminal device 100, and receive a packet from the terminal device 100. The communication unit 1031 may be configured to communicate with the network management device 400, and receive and send a message from and to the network management device 400. The communication unit 1031 may be further configured to measure a signal condition of each channel, for example, signal strength.

The processing unit 1032 may be configured to process, control, and schedule received and sent data, packets, or the like.

It may be understood that for specific implementation of the function units included in the network device 300, refer to the foregoing embodiments. Details are not described herein again.

As shown in FIG. 10, the network management device 400 may include a communication unit 1041 and a processing unit 1042.

The communication unit 1041 may be configured to: communicate with the network device 200 and the network device 300, send a control instruction or a data packet to the network device 200 and the network device 300, and receive a packet, data, or a message of the network device 200 and the network device 300.

The processing unit 1042 may be configured to control, configure, and schedule managed network devices, such as the network device 200 and the network device 300. The processing unit 1042 may be further configured to process received and sent data, packets, or the like. For example, the network management device 400 may successively receive two same packets from the terminal device 100 that are received by the network device 200 and the network device 300, and then the network management device 400 may reserve or forward a first received packet, and delete a later received duplicate packet.

It may be understood that for specific implementation of the function units included in the network management device 400, refer to the foregoing embodiments. Details are not described herein again.

Specifically, logical units of an apparatus 1100 provided in an embodiment of this application are described herein. The apparatus 1100 may be the terminal device 100. In this embodiment of this application, logical function division may be performed on the apparatus 1100. For example, each logical unit may be obtained through division based on each function of the apparatus 1100, or two or more functions of the apparatus 1100 may be integrated into one logical unit. This is not limited in this embodiment. The integrated logical unit may be implemented in a form of hardware, software, or a combination of hardware and software. The apparatus 1100 may include any one of the following: a CPE, a router, a mobile phone, a tablet computer, a portable computer, a mobile smart home device, a vehicle-mounted device, a wearable device, a virtual reality terminal device, an augmented reality terminal device, a terminal in industrial control, a terminal in unmanned driving, a terminal in telemedicine, a terminal in a smart grid, a terminal in transportation safety, a terminal in a smart city, and a terminal in a smart home. In some embodiments, the apparatus 1100 may be implemented as the CPE or the first device in the foregoing embodiments, and the apparatus 1100 may be configured to implement functions of the CPE described in the foregoing embodiments.

For example, FIG. 11 is a schematic diagram of logical units of the apparatus 1100 according to an embodiment of this application.

As shown in FIG. 11, the apparatus 1100 may include a control unit 1101, an obtaining unit 1102, a detection unit 1103, a communication unit 1104, and the like. The apparatus 1100 includes two radio frequency modules: a first radio frequency module and a second radio frequency module. The first radio frequency module operates on a 2.4 GHz frequency band, and the second radio frequency module operates on a 5 GHz frequency band; or the first radio frequency module operates on a 5 GHz frequency band, and the second radio frequency module operates on a 2.4 GHz frequency band.

The control unit 1101 is configured to enable or suppress the first radio frequency module or the second radio frequency module to start roaming.

The obtaining unit 1102 is configured to obtain a status of the first radio frequency module or the second radio frequency module, such as a state in which roaming is not started, a roaming request is initiated, a roaming process is in progress, and roaming is ended.

The detection unit 1103 is configured to detect a signal indicator of the first radio frequency module or a signal indicator of the second radio frequency module.

The communication unit 1104 is configured to connect to another apparatus, and receive a packet of the another apparatus or send a packet to the another apparatus.

More specifically, in some embodiments, the control unit is configured to enable the first radio frequency module to start first roaming. The obtaining unit is configured to obtain the status of the first radio frequency module or the second radio frequency module. The control unit is further configured to: if the obtaining unit detects that the first radio frequency module is in a process of the first roaming, suppress the second radio frequency module to start second roaming. The control unit is further configured to: if the obtaining unit detects that the first roaming of the first radio frequency module is ended, enable the second radio frequency module to start the second roaming.

In some embodiments, the obtaining unit is further configured to obtain that the first radio frequency module initiates a first roaming request. The control unit is further configured to: in response to obtaining, by the obtaining unit, that the first radio frequency module initiates the first roaming request, enable the first radio frequency module to start the first roaming.

In some embodiments, the detection unit is configured to detect a signal indicator of the first radio frequency module or a signal indicator of the second radio frequency module. The obtaining unit is further configured to obtain that the first radio frequency module initiates a first roaming request. The control unit is further configured to: in response to detecting that signal quality represented by a signal indicator of the first radio frequency module is poorer than signal quality represented by a signal indicator of the second radio frequency module, enable the first radio frequency module to start the first roaming.

In some embodiments, the obtaining unit is further configured to: in response to detecting that the signal quality represented by the signal indicator of the first radio frequency module is poorer than or equal to signal quality represented by a first threshold, obtain that the first radio frequency module initiates the first roaming request.

In some embodiments, the obtaining unit is further configured to: when the first radio frequency module is in the process of the first roaming, obtain that the second radio frequency module initiates a second roaming request.

In some embodiments, the obtaining unit is further configured to obtain that the second radio frequency module initiates a second roaming request. The control unit is further configured to: in response to detecting that signal quality represented by a signal indicator of the first radio frequency module is poorer than signal quality represented by a signal indicator of the second radio frequency module, enable the first radio frequency module to start the first roaming.

In some embodiments, the obtaining unit is further configured to: in response to detecting that the signal quality represented by the signal indicator of the second radio frequency module is poorer than or equal to signal quality represented by a second threshold, obtain that the second radio frequency module initiates the second roaming request.

In some embodiments, the control unit is configured to: in response to detecting that signal quality represented by a signal indicator of the first radio frequency module is poorer than signal quality represented by a signal indicator of the second radio frequency module and that the signal quality represented by the signal indicator of the first radio frequency module is poorer than or equal to signal quality represented by a third threshold, enable the first radio frequency module to start the first roaming.

In some embodiments, either of the signal indicator of the first radio frequency module and the signal indicator of the second radio frequency module includes a signal optimization degree indicator or a signal degradation degree indicator, the signal optimization degree indicator includes one or more of the following: signal strength, a channel quality indicator CQI, a signal to interference plus noise ratio SINR, or a transmit opportunity TXOP, and the signal degradation degree indicator includes one or more of the following: channel busyness, channel load, a packet retransmission rate, a bit error rate, a packet loss rate, a channel delay, or a quantity of missed beacon frames. A larger value of the signal optimization degree indicator indicates better signal quality, and a smaller value of the signal degradation degree indicator indicates better signal quality.

That the signal quality represented by the signal indicator of the first radio frequency module is poorer than or equal to signal quality represented by a first threshold includes: If the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold.

That the signal quality represented by the signal indicator of the second radio frequency module is poorer than or equal to signal quality represented by a second threshold includes: If the signal indicator of the second radio frequency module is the signal optimization degree indicator, a value of the signal indicator of the second radio frequency module is less than or equal to the second threshold; or if the signal indicator of the second radio frequency module is the signal degradation degree indicator, a value of the signal indicator of the second radio frequency module is greater than or equal to the second threshold.

That the signal quality represented by the signal indicator of the first radio frequency module is poorer than or equal to signal quality represented by a third threshold includes: if the signal indicator of the first radio frequency module is the signal optimization degree indicator, a value of the signal indicator of the first radio frequency module is less than or equal to the third threshold; or if the signal indicator of the first radio frequency module is the signal degradation degree indicator, a value of the signal indicator of the first radio frequency module is greater than or equal to the third threshold.

In some embodiments, the communication unit is configured to: before the first roaming is started, access a first wireless access point (AP) through the first radio frequency module. The communication unit is further configured to: after the first roaming is ended, access a third AP through the first radio frequency module. The first roaming is that the communication unit roams from the first AP to the third AP through the first radio frequency module, and the first AP and the third AP have same settings that include one or more of the following: a service set identifier SSID, an authentication password, an operating frequency band, or an encryption manner. The communication unit is further configured to: before the second roaming is started, access a second AP through the second radio frequency module. The communication unit is further configured to: after the second roaming is ended, access a fourth AP through the second radio frequency module. The second roaming is that the communication unit roams from the second AP to the fourth AP through the second radio frequency module, and the second AP and the fourth AP have same settings that include one or more of the following: a service set identifier SSID, an authentication password, an operating frequency band, or an encryption manner.

In some embodiments, the apparatus is a first apparatus, and the communication unit is further configured to send a packet through the first radio frequency module. The communication unit is further configured to send the packet through the second radio frequency module. The packet sent through the first radio frequency module and the packet sent through the second radio frequency module are successively received by a second apparatus, so that the packet that is first received by the second apparatus is reserved or forwarded by the second apparatus, and the packet that is later received by the second apparatus is deleted by the second apparatus.

In some embodiments, the second apparatus includes a wireless local area network access controller, and the second apparatus is configured to manage the first AP, the second AP, the third AP, and/or the fourth AP. The second apparatus is configured to receive the packet that is sent through the first radio frequency module and that is received by the first AP; the second apparatus is configured to receive the packet that is sent through the second radio frequency module and that is received by the second AP; the second apparatus is configured to receive the packet that is sent through the first radio frequency module and that is received by the third AP; and/or the second apparatus is configured to receive the packet that is sent through the second radio frequency module and that is received by the fourth AP.

It may be understood that for specific implementation of the logical units included in the apparatus 1100, refer to the detailed descriptions in the foregoing embodiments. Details are not described herein again.

It should be noted that, in embodiments of this application, division into the modules or the units is an example, and is merely logical function division. In actual implementation, another division manner may also be used. In addition, function units in embodiments may be integrated into one unit, or may exist alone physically, or two or more units may be integrated into one unit. The integrated unit may be implemented in a form of hardware, or may be implemented in a form of a software function unit.

It may be understood that, according to embodiments of this application and with reference to the roaming method provided in embodiments of this application, packet transmission reliability of a terminal can be improved in a WLAN dual fed and selective receiving roaming scenario, thereby greatly avoiding a possible loss that may be caused by a lost transmitted packet, and effectively ensuring better experience of a communication service.

An embodiment of this application further provides a chip. The chip may include an input interface, an output interface, and a processing circuit. In this embodiment of this disclosure, the input interface and the output interface may complete signaling or data exchange, and the processing circuit may complete generation and processing of signaling or data information.

An embodiment of this application further provides a chip system, including a processor, configured to support a computing device in implementing a function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and the function in any one of the foregoing embodiments.

An embodiment of this application further provides a computer-readable storage medium, where the computer-readable storage medium stores computer instructions or program code. When a processor runs the instructions or the program code, the processor is enabled to perform the method and the function in any one of the foregoing embodiments. The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to electronic, magnetic, optical, electromagnetic, infrared, or semiconductor systems, apparatuses or devices, or any suitable combination thereof. The computer-readable storage medium may be any usable medium accessible by a computer, or a data storage device, such as a server or a data center, integrating one or more usable media. More detailed examples of the computer-readable storage medium include an electrical connection with one or more wires, a magnetic medium (for example, a magnetic disk, a floppy disk, a hard disk, a magnetic tape, or a magnetic storage device), an optical medium (for example, an optical storage device or a DVD), a semiconductor medium (for example, a solid state drive), a random access memory (RAM), a read-only memory (ROM), an erasable programmable read-only memory (EPROM or flash memory), or any suitable combination thereof.

All or some of the foregoing embodiments may be implemented by software, hardware, firmware, or any combination thereof. When software is used to implement the embodiments, all or a part of the embodiments may be implemented in a form of a computer program product. Embodiments of this application further provide at least one computer program product that is tangibly stored on a non-transitory computer-readable storage medium. The computer program product includes one or more computer-executable instructions, for example, instructions included in a program module, and the instructions are executed in a device on a target real or virtual processor, to perform a process, a method, and a function in any one of the foregoing embodiments. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner.

According to the methods provided in embodiments of this application, this application further provides a computer program product. The computer program product includes computer program code. When the computer program code is run on a computer, the computer is enabled to perform a process, a method, and a function in the foregoing embodiments. Usually, a program module includes a routine, a program, a library, an object, a class, a component, a data structure, or the like that executes a specific task or implements a specific abstract data type. In various embodiments, the functions of the program modules may be combined or split between the program modules as required. Machine-executable instructions used for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, the function/operation specified in the flowchart and/or block diagram is implemented. The program code may be executed entirely on a computer, executed partially on a computer, executed as a standalone software package, executed partially on a computer and partially on a remote computer, or executed entirely on a remote computer or a server. In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

Various implementations of this disclosure have been described above. The foregoing descriptions are example descriptions rather than exhaustive descriptions, and are not limited to the disclosed implementations. Many modifications and changes are clear to a person of ordinary skill in the art without departing from the scope and spirit of described implementations. Selection of the terms used in this specification is intended to well explain principles of various implementations, actual applications, or improvements to technologies in the market, or to enable another person of ordinary skill in the art to understand various implementations disclosed in this specification.

In the foregoing specific implementations, the objectives, the technical solutions, and the beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined to achieve different technical effects. Various combinations are not listed in embodiments of this application.

In addition, although the operations of the methods in this disclosure are described in a particular order in the accompanying drawings, this does not require or imply that these operations need to be performed in the particular order, or that all the operations shown need to be performed to achieve the desired results. Instead, the steps depicted in the flowchart may change an order of execution. Additionally or alternatively, some steps may be omitted, a plurality of steps are combined into one step for execution, and/or one step is decomposed into a plurality of steps for execution. It should further be noted that, the features and functions of two or more apparatuses according to this disclosure may be specific in one apparatus. Instead, the features and functions of one apparatus described above may be further specific in a plurality of apparatuses.

According to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

## Claims

1. A roaming method, applied to a device, comprising:
enabling, by the device, a first radio frequency module to start first roaming, wherein the device comprises the first radio frequency module and a second radio frequency module;
if it is detected that the first radio frequency module is in a process of the first roaming, suppressing, by the device, the second radio frequency module to start second roaming; and
if it is detected that the first roaming of the first radio frequency module is ended, enabling, by the device, the second radio frequency module to start the second roaming.

2. The method according to claim 1, wherein the enabling, by the device, a first radio frequency module to start first roaming comprises:
in response to the first radio frequency module initiating a first roaming request, enabling, by the device, the first radio frequency module to start the first roaming.

3. The method according to claim 1, wherein the enabling, by the device, a first radio frequency module to start first roaming comprises:
detecting, by the device, that the first radio frequency module initiates a first roaming request; and
in response to detecting that signal quality represented by a signal indicator of the first radio frequency module is poorer than signal quality represented by a signal indicator of the second radio frequency module, enabling, by the device, the first radio frequency module to start the first roaming.

4. The method according to claim 2 or 3, wherein that the first radio frequency module initiates a first roaming request comprises: initiating, by the first radio frequency module, the first roaming request in response to detecting that the signal quality represented by the signal indicator of the first radio frequency module is poorer than or equal to signal quality represented by a first threshold.

5. The method according to any one of claims 1 to 4, further comprising:
when the first radio frequency module is in the process of the first roaming, detecting, by the device, that the second radio frequency module initiates a second roaming request.

6. The method according to claim 1, wherein the enabling, by the device, a first radio frequency module to start first roaming comprises:
detecting, by the device, that the second radio frequency module initiates a second roaming request; and
in response to detecting that signal quality represented by a signal indicator of the first radio frequency module is poorer than signal quality represented by a signal indicator of the second radio frequency module, enabling, by the device, the first radio frequency module to start the first roaming.

7. The method according to claim 5 or 6, wherein that the second radio frequency module initiates a second roaming request comprises:
initiating, by the second radio frequency module, the second roaming request in response to detecting that the signal quality represented by the signal indicator of the second radio frequency module is poorer than or equal to signal quality represented by a second threshold.

8. The method according to claim 1, wherein the enabling, by the device, a first radio frequency module to start first roaming comprises:
in response to detecting that signal quality represented by a signal indicator of the first radio frequency module is poorer than signal quality represented by a signal indicator of the second radio frequency module and that the signal quality represented by the signal indicator of the first radio frequency module is poorer than or equal to signal quality represented by a third threshold, enabling, by the device, the first radio frequency module to start the first roaming.

9. The method according to any one of claims 1 to 8, wherein either of the signal indicator of the first radio frequency module and the signal indicator of the second radio frequency module comprises a signal optimization degree indicator or a signal degradation degree indicator, the signal optimization degree indicator comprises one or more of the following: signal strength, a channel quality indicator CQI, a signal to interference plus noise ratio SINR, or a transmit opportunity TXOP, and the signal degradation degree indicator comprises one or more of the following: channel busyness, channel load, a packet retransmission rate, a bit error rate, a packet loss rate, a channel delay, or a quantity of missed beacon frames, wherein
a larger value of the signal optimization degree indicator indicates better signal quality, and a smaller value of the signal degradation degree indicator indicates better signal quality;
that the signal quality represented by the signal indicator of the first radio frequency module is poorer than or equal to signal quality represented by a first threshold comprises: if the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold;
that the signal quality represented by the signal indicator of the second radio frequency module is poorer than or equal to signal quality represented by a second threshold comprises: if the signal indicator of the second radio frequency module is the signal optimization degree indicator, a value of the signal indicator of the second radio frequency module is less than or equal to the second threshold; or if the signal indicator of the second radio frequency module is the signal degradation degree indicator, a value of the signal indicator of the second radio frequency module is greater than or equal to the second threshold; and
that the signal quality represented by the signal indicator of the first radio frequency module is poorer than or equal to signal quality represented by a third threshold comprises: if the signal indicator of the first radio frequency module is the signal optimization degree indicator, a value of the signal indicator of the first radio frequency module is less than or equal to the third threshold; or if the signal indicator of the first radio frequency module is the signal degradation degree indicator, a value of the signal indicator of the first radio frequency module is greater than or equal to the third threshold.

10. The method according to any one of claims 1 to 9, further comprising:
before the first roaming is started, accessing, by the device, a first wireless access point (AP) through the first radio frequency module; and after the first roaming is ended, accessing, by the device, a third AP through the first radio frequency module, wherein the first roaming is that the device roams from the first AP to the third AP through the first radio frequency module, and the first AP and the third AP have same settings that comprise one or more of the following: a service set identifier SSID, an authentication password, an operating frequency band, or an encryption manner; and
before the second roaming is started, accessing, by the device, a second AP through the second radio frequency module; and after the second roaming is ended, accessing, by the device, a fourth AP through the second radio frequency module, wherein the second roaming is that the device roams from the second AP to the fourth AP through the second radio frequency module, and the second AP and the fourth AP have same settings that comprise one or more of the following: a service set identifier SSID, an authentication password, an operating frequency band, or an encryption manner.

11. The method according to any one of claims 1 to 10, wherein the device is a first device, and the method further comprises:
sending, by the first device, a packet through the first radio frequency module; and
sending, by the first device, the packet through the second radio frequency module, wherein
the packet sent through the first radio frequency module and the packet sent through the second radio frequency module are successively received by a second device, so that the packet that is first received by the second device is reserved or forwarded by the second device, and the packet that is later received by the second device is deleted by the second device.

12. The method according to claim 11, wherein the second device comprises a wireless local area network access controller, and the second device is configured to manage the first AP, the second AP, the third AP, and/or the fourth AP; and
the second device is configured to receive the packet that is sent through the first radio frequency module and that is received by the first AP;
the second device is configured to receive the packet that is sent through the second radio frequency module and that is received by the second AP;
the second device is configured to receive the packet that is sent through the first radio frequency module and that is received by the third AP; and/or
the second device is configured to receive the packet that is sent through the second radio frequency module and that is received by the fourth AP.

13. The method according to any one of claims 1 to 12, wherein the first radio frequency module operates on a 2.4 GHz frequency band, and the second radio frequency module operates on a 5 GHz frequency band; or the first radio frequency module operates on a 5 GHz frequency band, and the second radio frequency module operates on a 2.4 GHz frequency band.

14. The method according to any one of claims 1 to 13, wherein the device comprises any one of the following: customer premises equipment (CPE), a router, a mobile phone, a tablet computer, a portable computer, a mobile smart home device, a vehicle-mounted device, a wearable device, a virtual reality terminal device, an augmented reality terminal device, a terminal in industrial control, a terminal in unmanned driving, a terminal in telemedicine, a terminal in a smart grid, a terminal in transportation safety, a terminal in a smart city, and a terminal in a smart home.

15. A roaming apparatus, comprising a first radio frequency module and a second radio frequency module, and further comprising:
a control unit, configured to enable the first radio frequency module to start first roaming; and
an obtaining unit, configured to obtain a status of the first radio frequency module or the second radio frequency module, wherein
the control unit is further configured to: if the obtaining unit detects that the first radio frequency module is in a process of the first roaming, suppress the second radio frequency module to start second roaming; and
the control unit is further configured to: if the obtaining unit detects that the first roaming of the first radio frequency module is ended, enable the second radio frequency module to start the second roaming.

16. The apparatus according to claim 15, wherein the obtaining unit is further configured to obtain that the first radio frequency module initiates a first roaming request; and the control unit is further configured to: in response to obtaining, by the obtaining unit, that the first radio frequency module initiates the first roaming request, enable the first radio frequency module to start the first roaming.

17. The apparatus according to claim 15, further comprising:
a detection unit, configured to detect a signal indicator of the first radio frequency module or a signal indicator of the second radio frequency module, wherein
the obtaining unit is further configured to obtain that the first radio frequency module initiates a first roaming request; and
the control unit is further configured to: in response to detecting that signal quality represented by a signal indicator of the first radio frequency module is poorer than signal quality represented by a signal indicator of the second radio frequency module, enable the first radio frequency module to start the first roaming.

18. The apparatus according to claim 16 or 17, wherein the obtaining unit is further configured to: in response to detecting that the signal quality represented by the signal indicator of the first radio frequency module is poorer than or equal to signal quality represented by a first threshold, obtain that the first radio frequency module initiates the first roaming request.

19. The apparatus according to any one of claims 15 to 18, wherein the obtaining unit is further configured to: when the first radio frequency module is in the process of the first roaming, obtain that the second radio frequency module initiates a second roaming request.

20. The apparatus according to claim 15, wherein
the obtaining unit is further configured to obtain that the second radio frequency module initiates a second roaming request; and
the control unit is further configured to: in response to detecting that signal quality represented by a signal indicator of the first radio frequency module is poorer than signal quality represented by a signal indicator of the second radio frequency module, enable the first radio frequency module to start the first roaming.

21. The apparatus according to claim 19 or 20, wherein the obtaining unit is further configured to: in response to detecting that the signal quality represented by the signal indicator of the second radio frequency module is poorer than or equal to signal quality represented by a second threshold, obtain that the second radio frequency module initiates the second roaming request.

22. The apparatus according to claim 15, wherein the control unit is configured to: in response to detecting that signal quality represented by a signal indicator of the first radio frequency module is poorer than signal quality represented by a signal indicator of the second radio frequency module and that the signal quality represented by the signal indicator of the first radio frequency module is poorer than or equal to signal quality represented by a third threshold, enable the first radio frequency module to start the first roaming.

23. The apparatus according to any one of claims 15 to 22, wherein either of the signal indicator of the first radio frequency module and the signal indicator of the second radio frequency module comprises a signal optimization degree indicator or a signal degradation degree indicator, the signal optimization degree indicator comprises one or more of the following: signal strength, a channel quality indicator CQI, a signal to interference plus noise ratio SINR, or a transmit opportunity TXOP, and the signal degradation degree indicator comprises one or more of the following: channel busyness, channel load, a packet retransmission rate, a bit error rate, a packet loss rate, a channel delay, or a quantity of missed beacon frames, wherein
a larger value of the signal optimization degree indicator indicates better signal quality, and a smaller value of the signal degradation degree indicator indicates better signal quality;
that the signal quality represented by the signal indicator of the first radio frequency module is poorer than or equal to signal quality represented by a first threshold comprises: if the signal indicator of the first radio frequency module is the signal optimization degree indicator, a value of the signal indicator of the first radio frequency module is less than or equal to the first threshold; or if the signal indicator of the first radio frequency module is the signal degradation degree indicator, a value of the signal indicator of the first radio frequency module is greater than or equal to the first threshold;
that the signal quality represented by the signal indicator of the second radio frequency module is poorer than or equal to signal quality represented by a second threshold comprises: if the signal indicator of the second radio frequency module is the signal optimization degree indicator, a value of the signal indicator of the second radio frequency module is less than or equal to the second threshold; or if the signal indicator of the second radio frequency module is the signal degradation degree indicator, a value of the signal indicator of the second radio frequency module is greater than or equal to the second threshold; and
that the signal quality represented by the signal indicator of the first radio frequency module is poorer than or equal to signal quality represented by a third threshold comprises: if the signal indicator of the first radio frequency module is the signal optimization degree indicator, a value of the signal indicator of the first radio frequency module is less than or equal to the third threshold; or if the signal indicator of the first radio frequency module is the signal degradation degree indicator, a value of the signal indicator of the first radio frequency module is greater than or equal to the third threshold.

24. The apparatus according to any one of claims 15 to 23, further comprising:
a communication unit, configured to: before the first roaming is started, access a first wireless access point (AP) through the first radio frequency module, wherein the communication unit is further configured to: after the first roaming is ended, access a third AP through the first radio frequency module, wherein the first roaming is that the communication unit roams from the first AP to the third AP through the first radio frequency module, and the first AP and the third AP have same settings that comprise one or more of the following: a service set identifier SSID, an authentication password, an operating frequency band, or an encryption manner; and
the communication unit is further configured to: before the second roaming is started, access a second AP through the second radio frequency module; and the communication unit is further configured to: after the second roaming is ended, access a fourth AP through the second radio frequency module, wherein the second roaming is that the communication unit roams from the second AP to the fourth AP through the second radio frequency module, and the second AP and the fourth AP have same settings that comprise one or more of the following: a service set identifier SSID, an authentication password, an operating frequency band, or an encryption manner.

25. The apparatus according to any one of claims 15 to 24, wherein the apparatus is a first apparatus, and
the communication unit is further configured to send a packet through the first radio frequency module; and
the communication unit is further configured to send the packet through the second radio frequency module, wherein
the packet sent through the first radio frequency module and the packet sent through the second radio frequency module are successively received by a second apparatus, so that the packet that is first received by the second apparatus is reserved or forwarded by the second apparatus, and the packet that is later received by the second apparatus is deleted by the second apparatus.

26. The apparatus according to claim 25, wherein the second apparatus comprises a wireless local area network access controller, and the second apparatus is configured to manage the first AP, the second AP, the third AP, and/or the fourth AP; and
the second apparatus is configured to receive the packet that is sent through the first radio frequency module and that is received by the first AP;
the second apparatus is configured to receive the packet that is sent through the second radio frequency module and that is received by the second AP;
the second apparatus is configured to receive the packet that is sent through the first radio frequency module and that is received by the third AP; and/or
the second apparatus is configured to receive the packet that is sent through the second radio frequency module and that is received by the fourth AP.

27. The apparatus according to any one of claims 15 to 26, wherein the first radio frequency module operates on a 2.4 GHz frequency band, and the second radio frequency module operates on a 5 GHz frequency band; or the first radio frequency module operates on a 5 GHz frequency band, and the second radio frequency module operates on a 2.4 GHz frequency band.

28. The apparatus according to any one of claims 15 to 27, wherein the apparatus comprises any one of the following: customer premises equipment (CPE), a router, a mobile phone, a tablet computer, a portable computer, a mobile smart home device, a vehicle-mounted device, a wearable device, a virtual reality terminal device, an augmented reality terminal device, a terminal in industrial control, a terminal in unmanned driving, a terminal in telemedicine, a terminal in a smart grid, a terminal in transportation safety, a terminal in a smart city, and a terminal in a smart home.

29. An electronic device, wherein the electronic device comprises a transceiver, a memory, and a processor coupled to the memory, the transceiver is configured to receive and send a packet, the memory stores executable instructions, and the processor is configured to invoke the executable instructions, so that the electronic device performs the method according to any one of claims 1 to 14.

30. A computer-readable storage medium, wherein the computer-readable storage medium stores computer-executable instructions; and when the computer-executable instructions are executed by a processor, the method according to any one of claims 1 to 14 is implemented.

31. A computer program product, wherein the computer program product comprises computer-executable instructions; and when the computer-executable instructions are executed, the method according to any one of claims 1 to 14 is implemented.

32. A chip, comprising a processing circuit, used in a device, and configured to perform the method according to any one of claims 1 to 14.

33. A communication system, comprising a first device, a second device, a first AP, a second AP, a third AP, and a fourth AP, wherein the first device is configured to perform the method according to any one of claims 1 to 14.
